# NEW EUROPEAN PATENT SPECIFICATION

(11) **EP 4 004 131 B2**
(45) Date of publication and mention of the opposition decision: **23.07.2025**
(45) Mention of the grant of the patent: 15.03.2023
(21) Application number: 20825196.7
(22) Date of filing: 03.12.2020
(51) Int. Cl.: C09D 11/101, C09D 11/38, C09D 11/322

(54) **UV INKJET COMPOSITIONS**
UV-TINTENSTRAHLZUSAMMENSETZUNGEN
COMPOSITIONS POUR JET D'ENCRE UV

(30) Priority: 04.12.2019 US 201962943324 P; 15.05.2020 US 202063025213 P
(43) Date of publication of application: 01.06.2022
(73) Proprietor: Sun Chemical B.V., 1382 LV Weesp (NL)
(72) Inventor: BUDDEN, Thomas, Bath Somerset BA3 4RT (GB); CORCORAN, Neil, Bath Somerset BA3 4RT (GB); HALL, Steve, Bath Somerset BA3 4RT (GB); WEEKS, Daniel, Bath Somerset BA3 4RT (GB); SPEIRS, Andrew, Bath Somerset BA3 4RT (GB); ILLSLEY, Derek, Bath Somerset BA3 4RT (GB)
(74) Representative: Carpmaels & Ransford LLP
(86) International application number: PCT/GB2020/053098
(87) International publication number: WO 2021/111134

(56) References cited:
- EP-A1- 1 412 438
- EP-A1- 2 169 021
- EP-A1- 3 300 915
- EP-A1- 3 572 234
- WO-A1-2015/173552
- WO-A1-2016/179213
- WO-A1-2016/186838
- WO-A1-2018/022590
- WO-A1-2018/042193
- WO-A1-2019/081339
- WO-A1-2019/190585
- WO-A1-97/31071
- US-A1- 2012 270 018
- US-A1- 2015 203 695
- US-A1- 2016 152 042

## Description

The present invention addresses the issue of UV-curable inkjet compositions requiring the use of high photoinitiator concentrations to deliver satisfactory cure in air, especially when cured with UV-LED light sources. The present invention also addresses the issue of stray light stability of UV-curable inkjet compositions.

In particular, the present invention provides a UV-curable inkjet composition comprising ≥ 20% (w/w) of any blend of monofunctional acrylate monomers ≤ 6.0% (w/w) of any blend of photo initiators, and one or more acrylated amine(s) derived from the Michael reaction of an alkanolamine with one or more multifunctional acrylate monomer(s) or oligomer(s)). The compositions of the present invention achieve satisfactory cure when exposed to two or more separate exposures of UV irradiation.

### BACKGROUND OF THE INVENTION

A number of references describe monofunctional UV-curable inkjet compositions which may be cured under the action of output from UV-LED light sources, but invariably require, as exemplified by the examples, high amounts of photoinitiator, for example concentrations of 9.0% or more, to achieve the desired cure. A monofunctional UV-curable inkjet composition may be defined as one where the majority (preferably ≥ 90% (w/w)) of the polymerisable component is made up by monofunctional monomers; that is those monomers having only one polymerszable (ethylenically unsaturated) group as part of their molecular structure.

EP2302007 discloses thioether substituted benzophenone photoinitiators and their use in the UV-LED curing of inkjet compositions. The examples all contain greater than 10% of photoinitiator (mostly greater than 14%) to achieve satisfactory cure. The process of curing the compositions through a multi-exposure approach was not disclosed.

WO2018/197852 describes how to overcome the colour shift issue associated with the use of thioxanthone-containing inkjet compositions through the use of specific stabiliser and monomer blends. Again, all the illustrative examples comprise greater than 9.0% of photoinitiator.

GB2554817 discloses how polyethyleneimine-based dispersants can help overcome the poor surface cure of UV-LED curable inkjet compositions. However, the examples all comprise 12% photoinitiator, with a further requirement that the minimum acylphosphine oxide photoinitiator concentration should also be 4%. Furthermore, GB2554817 does not reveal, or allude to, the use of acrylated amines in combination with the multi-exposure approach of the current invention to achieve the required cure at acceptable total UV doses, with photoinitiator concentrations as low as 5.0%, and lower.

WO2017/191043 discloses thiol modified acylphosphine oxide photoinitiators and their use in UV-LED curable inkjet compositions having reduced odour and extractability. However, the compositions as revealed by the examples are multifunctional with respect to the monomer content and greater than 20% of photoinitiator was required in the examples to deliver the desired UV-cure.

US2011/0159251 discloses multifunctional inkjet compositions, with greater than 20% of multifunctional monomer, which may be cured by UV-LED lamps, and may comprise acrylated amines. A multifunctional monomer is one having two or more polymerisable (ethylenically unsaturated) groups as part of its molecular structure. A multifunctional UV-curable inkjet composition can be defined as one where at least 10% of the composition is formed of multifunctional monomers. The examples of US2011/0159251 all required greater than 11% of photoinitiator to achieve acceptable cure.

The high photoinitiator concentrations expressed in the examples of these references would most likely be detrimental to the stray light (and thermal) stability of the revealed compositions. It is known that acylphosphine oxide type photoinitiators can be especially prone to stray light instability and a further aspect of the current invention is that the total concentration of acylphosphine type photoinitiators should be less than 5.0%, preferably 4.0% or less, and even more preferably 3.0% or less.

The issue of stray light stability of UV-curable inkjet compositions is well recognised in the industry. It refers to any unwanted light, whether that be stray light from the UV irradiating lamps or daylight impinging on inks in the printhead, causing unwanted photopolymerisation of the ink with the consequent risk of blocking nozzles in the printhead resulting in 'dropped' nozzles leading to print defects. In the worst case, the adventitious photopolymerisation resulting from stray light can lead to irreversible blockage of the printhead with its consequent, expensive loss. Clearly, this is highly undesirable and a number of press design and management controls are used to mitigate against the risk of unwanted photopolymerisation resulting from stray light. These include focussed, and shielded UV light sources to limit the amount of stray UV light reaching the printhead. However, there remains the risk of UV light reflecting from the substrate and other surfaces to reach the printheads. Capping the printheads is a further process control which can help prevent stray light reaching the inks in the printhead nozzles. Purging the printheads with fresh ink and/or suitable flush solutions on a regular basis is also another press management control measure used to help mitigate against the unwanted polymerisation of ink in the printhead.

The high concentrations of photoinitiators that are commonly used in the preparation of UV-curable inkjet compositions, such as 10% (w/w) or more, will tend to make such UV-curable inkjet compositions more prone to stray light instability issues. Therefore, a route to improving the stability of UV-curable inkjet compositions towards stray light is to reduce the photoinitiator content of the inks. However, this results in inks having deficient cure responses, especially when the inks are cured in ambient air. One of the main cure issues associated with UV-curable inkjet compositions relates to their poor surface cure, resulting from oxygen inhibition of the printed ink. This can be overcome by applying a protective 'blanket', such as nitrogen inertion, to exclude a majority of the oxygen from the point of cure to allow inkjet compositions to cure satisfactorily with low photoinitiator concentrations. However, nitrogen inertion is expensive and is not readily suited to multi-pass printers, although it has been implemented in single pass UV-inkjet printers for the production of printed material for application in food packaging, where low odour and the highest conversion of monomers are required to mitigate against the risk of food contamination.

From the brief foregoing above, it will be appreciated by those skilled in the art that the improved stray light stability conferred by the methods disclosed by the invention is clearly advantageous, with the risk associated with unwanted photopolymerisation causing partial, or total, blocking of the nozzles of an inkjet printhead being significantly reduced.

Interestingly, enhanced oxygen inhibition has actually been reported as a means to improve the stray light stability of UV inkjet compositions, as described in US2012/0154495. Here, a gas mixture with an oxygen content greater than that of ambient air was used to increase the oxygen inhibition of the ink to help improve the stray light stability. Although not using a protective blanket in the accepted sense, US2019/0105906 describes the use of smoke to scatter UV light to reduce the amount of any stray light impinging on the printhead, thereby reducing the risk of unwanted photopolymerisation.

JP2019/018457 describes a printer process which identifies stray light but does not describe how to improve the stray light stability of the ink itself. Clearly, none of these reported methods are ideal solutions for reducing the risks associated with stray light.

US9238745 describes how stable nitroxy radical stabilisers, such as the well know OHTEMPO, can be used in UV-curable inkjet compositions to improve the stray light stability. However, US9238745 does not reveal the multiple exposure UV process of the current invention or the use of aminoacrylates derived from the reaction of an alkanolamine with a multifunctional acrylate monomer. US9238745 used an aminoacrylate derived from the reaction of an alkylamine reacted with a multifunctional acrylate monomer and used a single UV exposure to cure the inks. Where inkjet compositions were cured under the action the light emitted by a UV-LED lamp the inks comprised a total photoinitiator content of 9.0%.

A number of instances in the references describe multifunctional UV-curable inkjet compositions, where the polymerisable component is comprised almost entirely of multifunctional monomers, which may further comprise acrylated amines and which may be cured under the action of the light emitted by UV-LED. US8985753, WO2016/007593, WO2016/186838 are instances of such multifunctional compositions, but none of these teach how to satisfactorily cure inkjet compositions where the majority of the polymerisable component is made up of monofunctional monomers, according to the current invention. WO2016/186838 does disclose the use of alkanolamine-derived acrylated amines, but requires the monofunctional monomer content of the inks to be less than 10%. None of these records disclose the use of multiple exposure to separate UV irradiations to achieve acceptable cure of monofunctional inks, having low photoinitiator concentrations, at commercially acceptable total UV doses.

WO2016/199589 and US10195874 describe methods of reducing the oxygen concentration at the point of cure to enhance the UV cure response of inkjet compositions. WO2016/199589 discloses using an inert gas, such as nitrogen, to reduce the oxygen concentration to less than 5%, whereas US10195874 uses a physical barrier film over the ink to prevent the ingress of oxygen. The current invention does not require the exclusion of oxygen from the point of cure and achieves cure at commercially acceptable total UV doses, especially surface cure, even under the action of UV-LED light sources, with photoinitiator concentrations as low as 5.0%, or lower.

The present invention has clear benefits, not only over what has been revealed in the prior art, but also over what is the practiced and accepted state-of-the-art for producing UV-curable inkjet compositions, especially for UV-LED cure. The improved stray light stability achieved with the current invention will enable higher press productivity as it will allow the number of press maintenance operations, such as printhead purging and printhead replacements, to be reduced compared with current commercial inkjet compositions, particularly so for printing presses equipped with UV-LED lamps.

To the best of the inventors' knowledge, and especially for what are known in the industry as monofunctional UV-curable inkjet inks, the ability to achieve satisfactory cure with such low concentrations of photoinitiators within the capabilities of current commercial inkjet presses, in air, has not previously been revealed. Indeed, it is apparent from the identified prior art that, for monofunctional inks especially, photoinitiator concentrations of 10% or greater are typically used.

The common, state-of-the-art, approach adopted for UV-curable inkjet compositions in a range of applications to achieve satisfactory cure, in air, is to use high concentrations of blends of photoinitiators. In some cases, as reported in the prior art, and what is understood to be widely practiced commercially, photoinitiator concentrations in excess of 10% (w/w) of the total inkjet composition are used. This is particularly the case with inkjet compositions that are cured under the emissions from UV-LED light sources. There are a number of issues related to the use of such high photoinitiator concentrations, including poor ink stability; recrystallisation of photoinitiators in stored inks; and odour of cured inks.

The inventors have surprisingly found that in those instances where inkjet compositions are exposed to a number of separate UV exposures that it is possible to achieve satisfactory cure with photoinitiator concentrations of ≤ 6%, and in some cases ≤ 5.0% (w/w) of the total inkjet composition. What is more surprising is that this has been achieved with inkjet compositions comprising ≥ 20% (w/w) or more of monofunctional acrylate monomers. Indeed, satisfactory cure has been achieved with inkjet compositions where the polymerisable component comprises almost entirely of monofunctional acrylate monomers which, even under UV-LED, is a most surprising finding.

The key to resolving the issue confronting the current state-of-the art use of high concentrations of photoinitiators has been through the insightful recognition of the beneficial impact of the use of aminoacrylates in combination with a process where the inkjet composition is cured with two or more separate doses of UV irradiation. Thus, where compositions of the invention are cured with two or more exposures to UV irradiation, and the total UV dose resulting from all exposures is greater than 100 mJ/cm² then satisfactory cure can be achieved with photoinitiator concentrations of ≤ 6%, even ≤ 5.0%.

Citation or identification of any document in this application is not an admission that such represents prior art to the present invention.

### SUMMARY OF INVENTION

In a first aspect, the present invention provides a UV-curable inkjet composition comprising:
≥ 20% (w/w) of any blend of monofunctional acrylate monomers;
≤ 6.0% (w/w) of any blend of photoinitiators;
and one or more acrylated amine(s) derived from the Michael reaction of one or more multifunctional acrylate monomer(s) or oligomer(s) with one or more alkanolamine(s).

In a second aspect, the present invention provides a process of printing and curing an ink composition, comprising applying the composition of the first aspect onto a substrate and curing.

In a third aspect, the present invention provides a printed article comprising the composition of the first aspect.

In a fourth aspect, the present invention provides a method of providing a printed article, comprising inkjet printing an inkjet composition of the first aspect onto a substrate and curing the composition by exposure to two or more separate UV irradiations, wherein the sum total of all the separate UV exposures is ≥ 100 mJ/cm².

In a fifth aspect, the present invention provides a printed article resulting from the process of the second aspect or the method of the fourth aspect.

The invention is further described by the following numbered paragraphs:
1. A UV-curable composition comprising:
   ≥ 20% (w/w) of any blend of monofunctional acrylate monomers;
   ≤ 6.0 % (w/w) of any blend of photoinitiators;
   and one or more acrylated amines derived from the Michael reaction of one or more multifunctional acrylate monomer(s) or oligomer(s) with one or more alkanolamine(s);
   wherein the composition can be cured by exposure to two or more separate UV irradiations, where the sum total of all the separate UV exposures is ≥ 100 mJ/cm².
2. The composition of paragraph 1, wherein the composition is an inkjet ink composition.
3. The composition of paragraph 1, comprising ≤ 5.0% (w/w) of any blend of photoinitiators.
4. The composition of paragraph 1, comprising ≤ 4.0% (w/w) of any blend of photoinitiators.
5. The composition of paragraph 1, comprising ≤ 3.0% (w/w) of any blend of photoinitiators.
6. The composition of paragraph 1, comprising 2.5-6.0% (w/w) of any blend of photoinitiators.
7. The composition of paragraph 1, comprising greater than 2.0% (w/w) of acrylated amine.
8. The composition of paragraph 1, comprising ≥ 4.0% (w/w) of any blend of alkanolamine derived acrylated amines.
9. The composition of paragraph 1, wherein the acrylated amine is derived from the Michael reaction of ethanolamine with any blend of difunctional and trifunctional acrylate monomers.
10. The composition of paragraph 1, wherein the acrylated amine is derived from the Michael reaction of diethanolamine with any blend of difunctional, trifunctional, tetrafunctional, or higher functional acrylate monomers or oligomers.
11. The composition of paragraph 1, wherein the acrylated amine is derived from the reaction of ethanolamine with any blend of hexanediol diacrylate and 3-methylpentanediol diacrylate.
12. The composition of paragraph 1, wherein the acrylated amine is derived from the Michael reaction of any blend of ethanolamine and diethanolamine with ethoxylated trimethylolpropane triacrylate.
13. The composition of paragraph 1, wherein the acrylated amine is derived from the reaction of ethanolamine with any blend of poly(ethylene glycol) diacrylates and poly(propylene glycol) diacrylates.
14. The composition of any preceding paragraph, further comprising an epoxy acrylate.
15. The composition of paragraph 14, wherein the epoxy acrylate is the reaction product of an alkanediol diglycidyl ether with acrylic acid.
16. The composition of any preceding paragraph, further comprising a polyester acrylate.
17. The composition of paragraph 16, wherein the polyester acrylate has an acrylate functionality of three or less.
18. The composition of any preceding paragraph, further comprising an inert acrylic resin.
19. The composition of paragraph 1, wherein the photoinitiator component comprises an acylphosphine oxide photoinitiator.
20. The composition of paragraph 19, wherein the acylphosphine oxide photoinitiator is any multifunctional, polymerizable or polymeric acylphosphine oxide.
21. The composition of paragraph 19, wherein the acylphosphine oxide photoinitiator is selected from the group consisting of diphenyl(2,4,6-trimethylbenzoyl)phosphine oxide, phenylbis(2,4,6-trimethylbenzoyl)phosphine oxide, ethyl (2,4,6-trimethylbenzoyl) phenylphosphinate, bis(2,6-dimethoxybenzoyl)-2,4,4-trimethylpentylphosphinoxide and blends thereof.
22. The composition of paragraph 1, wherein the photoinitiator component comprises a thioxanthone photoinitiator.
23. The composition of paragraph 22, wherein the thioxanthone photoinitiator is any multifunctional, polymerizable or polymeric thioxanthone.
24. The composition of paragraph 22, wherein the thioxanthone photoinitiator is selected from the group consisting of isopropyl thioxanthone, diethylthioxanthone, chloropropylthioxanthone, chlorothioxanthone and blends thereof.
25. The composition of any preceding paragraph, comprising ≥ 30% (w/w) of any blend of monofunctional monomers.
26. The composition of any preceding paragraph, comprising ≥ 40% (w/w) of any blend of monofunctional monomers.
27. The composition of any preceding paragraph, comprising ≥ 50% (w/w) of any blend of monofunctional monomers.
28. The composition of any preceding paragraph, comprising ≥ 75% (w/w) of any blend of monofunctional monomers.
29. The composition of any preceding paragraph, comprising ≤ 40% any blend of multifunctional monomers.
30. The composition of any preceding paragraph, comprising ≤ 30% any blend of multifunctional monomers.
31. The composition of any preceding paragraph, comprising ≤ 20% any blend of multifunctional monomers.
32. The composition of any preceding paragraph, comprising ≤ 10% any blend of multifunctional monomers.
33. The composition of any preceding paragraph, wherein the composition is a process cyan ink having a stray light viscosity change of ≤ 20%, more preferably ≤ 15%; most preferably ≤ 10%.
34. The composition of any preceding paragraph, wherein the composition is a process magenta ink having a stray light viscosity change of ≤ 55%, more preferably ≤ 50%; most preferably ≤ 45%.
35. The composition of any preceding paragraph, wherein the composition is a process yellow ink having a stray light viscosity change of ≤ 23%, more preferably ≤ 18%; most preferably ≤ 13%.
36. The composition of any preceding paragraph, wherein the composition is a process black ink having a stray light viscosity change of ≤ 20%, more preferably ≤ 15%; most preferably ≤ 12%.
37. A method of providing a printed article, comprising inkjet printing an ink composition of any one of paragraphs 1-39 onto a substrate and curing the composition by exposure to two or more separate UV irradiations, wherein the sum total of all the separate UV exposures is ≥ 100 mJ/cm².
38. The method of paragraph 37, wherein the total dose from all the UV exposures is ≤ 1000 mJ/cm².
39. The method of paragraph 37, wherein the total dose from all the UV exposures is ≤ 750 mJ/cm².
40. The method of paragraph 37, wherein the total dose from all the UV exposures is ≤ 500 mJ/cm².
41. The method of paragraph 37, wherein the total dose from all the UV exposures is ≤ 300 mJ/cm².
42. The method of paragraph 37, wherein the total dose from all the UV exposures is ≤ 200 mJ/cm².
43. The method of paragraph 37, wherein the ink is cured by four or more separate UV exposures.
44. The method of paragraph 37, wherein the time between at least two successive exposures is at least 0.1 seconds.
45. The method of paragraph 37, wherein at least one of the separate UV irradiations is provided by a UV-LED light source.
46. The method of paragraph 37, which is cured solely under the action of the emissions from UV-LED light sources.
47. The method of any one or more of paragraphs 37-46 which is cured via a multi-pass inkjet printing process.
48. The method of any one or more of paragraphs 37-46 which is cured via a single pass inkjet printing process.

### DETAILED DESCRIPTION

The present invention enables UV-curable inkjet compositions to cure satisfactorily, with surprisingly low concentrations of photoinitiators ≤ 6.0% (w/w) through the use of one or more acrylated amine(s) and by curing the inks via a multi-exposure UV irradiation process. The total UV-dose required to cure the inventive compositions is similar to that of comparative compositions comprising significantly higher concentrations of photoinitiators. Furthermore, UV-inkjet ink compositions prepared according to the invention maintain the other properties required, including adhesion.

Preferably, the inks of the present invention use photoinitiators that do not pose a significant risk to human health, i.e. that are not (or are not suspected of being) mutagenic, carcinogenic or reprotoxic.

Inkjet compositions prepared according to the present invention with their low photoinitiator concentrations have a number of desirable technical advantages compared with the current state-of-the-art and prior art, including improved ink storage and light stability; reduced risk associated with photoinitiator recrystallisation in inks; and lower odour after cure.

The present invention has clear commercial benefits, not only over what has been revealed in the prior art but also over what is the practiced and accepted state-of-the-art for producing UV-curable inkjet compositions, especially for UV-LED cure, which requires photoinitiator concentrations of ≥ 10%. The inventors have demonstrated that satisfactory cure, which could be delivered on current commercial presses, can be achieved by using photoinitiator concentrations of ≤ 6.0%; a surprising finding of clear commercial benefit. The findings from this invention may be used in all instances of UV-inkjet printing, including multi-pass and single-pass printing, with any combination of UV light sources, including UV-LED.

The present invention describes the surprising finding that photopolymerisable inkjet compositions can achieve satisfactory cure, in air, when comprising ≥ 50.0% or even ≥ 75.0% by weight of a blend of monofunctional monomers where ≤ 6.0% or even ≤5.0% by weight of a blend of photoinitiators is used. The present invention also describes the surprising finding that photopolymerisable inkjet compositions having improved stray light stability compared with current formulating practices can achieve satisfactory cure, in air, preferably when comprising high levels of monofunctional monomers, for example ≥ 30% by weight of any blend of monofunctional monomers, ≥ 40% by weight of any blend of monofunctional monomers, ≥ 50% by weight of any blend of monofunctional monomers, ≥ 60% by weight of any blend of monofunctional monomers, or even ≥ 75% by weight of any blend of monofunctional monomers; and comprising ≤ 6.0% by weight of a blend of photoinitiators, ≤ 5.5% by weight of a blend of photoinitiators, ≤ 5.0% by weight of a blend of photoinitiators, ≤ 4.5% by weight of a blend of photoinitiators, ≤ 4.0% by weight of a blend of photoinitiators, ≤ 3.5% by weight of a blend of photoinitiators, ≤ 3.0% by weight of a blend of photoinitiators, or 2.0-6.0% by weight of a blend of photoinitiators. The use of reduced photoinitiator concentrations results in UV-curable inkjet compositions with improved stray light stability.

As used herein, a blend is a mixture of one or more components, preferably two or more components.

The above-mentioned findings are preferably achieved by the present invention through the use of an acrylated amine component and by exposing the composition to two or more discrete doses of UV, where a total UV dose, accumulated from all the discrete exposures, is preferably ≥ 100 mJ/cm², and it is preferred that the time between at least two successive UV exposures should be at least 0.1 seconds. Any source of UV radiation can be used, and examples include but are not limited to: medium pressure mercury lamps; eximer lamps; flash lamps; xenon lamps; and UV-LED lamps. It is preferred that at least one of the UV exposures is provided by the output from a UV-LED lamp, where the peak irradiance power of the UV-LED lamp can be between 2W/cm² and 36 W/cm² and the wavelength of emission can be from 260 to 420 nm, with wavelengths between 360 and 400 nm especially preferred.

In terms of the definition of cure, this refers to a physical assessment of the cure, especially of the surface cure of the inventive UV inkjet compositions. It is a well-known issue of UV inkjet compositions, with their low viscosities and oftentimes high concentrations of monofunctional monomers, that they can be prone to significant oxygen inhibition resulting in poor surface cure, which results in tacky and/or even wet ink surfaces. The accepted state-of-the art approach to overcoming the effects of oxygen inhibition in UV-inkjet compositions is to increase the concentration of the photoinitiators, in some cases to levels in excess of 10% (w/w) of the total ink composition. However, the use of ever-increasing concentrations of photoinitiators to deliver acceptable cure, especially of lower viscosity inkjet compositions, often results in inks having poorer stray light (and thermal) stability. The current invention addresses this by recognizing that it would be beneficial to use lower concentrations of photoinitiators to deliver improved stray light stability but also shows how this can be done whilst maintaining an excellent cure response which will allow inventive inkjet compositions to function satisfactorily on commercial inkjet presses.

The use of acrylated amines in UV-curable inkjet compositions has been widely reported and demonstrated, but again this has invariably been in combination with high photoinitiator concentrations. Other approaches to overcoming the deleterious effects of oxygen inhibition have included the use of inert gas blankets, such as nitrogen, to exclude the majority of the atmospheric oxygen from the point of cure. A further approach to enhance the physical aspect of surface cure is to include a significant concentration of multifunctional monomers, that is those with two or more ethylenically unsaturated groups (acrylates being preferred) as part of their chemical structure, into UV-curable inkjet compositions. This latter approach can be effective in improving the robustness of a cured ink surface but can have a negative impact on the adhesion (and flexibility) of the inks to various substrates, which would otherwise be achieved with compositions comprising a majority of monofunctional monomers as part of the polymerisable component of the ink.

The inventors have surprisingly found that UV-curable inkjet compositions can achieve satisfactory cure in air, and more especially surface cure, where the polymerisable component comprises predominantly of monofunctional monomers, with photoinitiator concentrations of ≤ 6.0% (w/w), more preferably ≤ 5.0%. This is achieved through the insightful use of acrylated amines in combination with a multi-exposure UV process. Indeed, the inventors have found that it is possible to achieve satisfactory cure using compositions and processes according to the invention with total UV doses from the multi-exposure process of preferably ≤ 300 mJ/cm2 , more preferably ≤ 2.00 mJ/cm2 , a most surprising finding. The inventors have found that satisfactory cure can be achieved through using the aspects of the current invention with photoinitiator concentrations as low as, or lower than, 5.0% (w/w). Thus, a further aspect of the invention is that UV-curable inkjet compositions achieve satisfactory cure via multiple exposures to a UV light source where the inkjet compositions comprise ≤ 6.0%, or ≤ 5.0%, or ≤ 4.0% of any blend of photoinitiators. The UV-curable inkjet compositions according to the present invention also have improved stray light stability.

In a further aspect of the invention, the UV-curable inkjet compositions comprise ≥ 1.0%, preferably ≥ 2.0%, more preferably ≥ 3.0%, and even more preferably ≥ 4.0% of any blend of acrylated amines (i.e. one or more acrylated amines). The acrylated amine component comprises at least one acrylated amine derived from the Michael reaction of one or more multifunctional acrylate monomer(s) or oligomer(s) with one or more alkanolamine(s), where the alkanolamine is preferably ethanolamine or diethanolamine. In yet a further aspect of the invention the acrylated amine is produced by the Michael reaction of ethanolamine or diethanolamine with a multifunctional monomer, the multifunctional monomer is selected from any of hexanediol diacrylate, 3-methylpentanediol diacrylate, polyethylene glycol diacrylate, polypropylene glycol diacrylate, ethoxylated trimethylolpropane triacrylate, glycerol propoxylate triacrylate, ethoxylated pentaerythritol tri- and tetraacrylate, propoxylated pentaerythritol tri- and tetraacrylate, ethoxylated dipentaerythritol penta- and hexaacrylate. Preferably, the acrylated amine is produced by the Michael reaction of ethanolamine with a multifunctional monomer, where the multifunctional monomer is selected from either hexanediol diacrylate, 3-methylpentanediol diacrylate, ethoxylated trimethylolpropane triacrylate or glycerol propoxylate triacrylate. It should be understood that in the case of the ethoxylated and propoxylated monomers just described, any degree of alkoxylation is covered, although, preferably the average degree of alkoxylation is 2 to 50, more preferably 4 to 25, even more preferably 4 to 15. Also encompassed by the invention are the polymeric acrylated amines revealed in WO2017/095786 such as polymeric acrylated amines comprising moieties of poly(ethylene glycol) diacrylate or polypropylene glycol) diacrylate and moieties of bireactive amine derived from primary amines, amines having two secondary amine groups and combinations thereof, preferably moieties of bireactive amine derived from amines having two secondary amine groups such as piperazine.

Preferably, the acrylated amine is derived from the Michael reaction of hexanediol diacrylate with ethanolamine.

Yet a further preferred aspect of the invention is that the polymerisable component of the UV-curable inkjet compositions of the invention is formed predominantly (preferably ≥ 60%, more preferably ≥ 70%, even more preferably ≥ 80% and most preferably ≥ 90%) of any blend of monofunctional monomers. Therefore, it is preferred that the concentration of any blend of multifunctional monomers should be ≤ 40%, preferably ≤ 30%, more preferably ≤ 20% and most preferably ≤ 10% of the composition. Where multifunctional monomers are used, a preferred type is the reaction product of alkanedioldiglycidyl ethers with acrylic acid, such as the reaction product of either butanediol diglycidyl ether or hexanediol diglycidyl ether with acrylic acid.

It will be appreciated by those skilled-in-the-art that it is generally the case that higher concentrations of monofunctional monomers result in UV-curable inkjet compositions having superior adhesion across a range of substrates, including but not limited to plastic substrates such as vinyl, acrylic, polyester, polystyrene, polycarbonate, etc. Indeed, the addition of 10% and even less of a multifunctional monomer, such as dipentaerythritol hexaacrylate ('DPHA') can have a deleterious impact on the adhesion profile of a monofunctional ink. As previously mentioned, it is the common practice with what are commonly referred to as monofunctional UV-curable inkjet compositions (those comprising less than 10% of multifunctional monomers) that to achieve satisfactory cure photoinitiator concentrations in excess of 8% are required, often greater than 10%, especially where the UV light is delivered by UV-LED lamps. This approach is taken to ensure that there is a sufficient radical flux generated at the point of UV irradiation to overcome the negative impact of oxygen inhibition on surface cure, in particular. It is therefore a most surprising finding by the inventors that monofunctional UV-curable inkjet compositions can deliver satisfactory cure with total UV doses of ≤ 300 mJ/cm², and even ≤ 200 mJ/cm², in air, with photoinitiator concentrations of ≤ 6.0%.

Although it is well known that acrylated amines can help reduce the impact of oxygen inhibition (and in some instances mitigate the oxygen inhibition), this in itself is not sufficient to deliver satisfactory surface cure of UV-curable inkjet compositions (and more so of monofunctional UV-curable inkjet compositions), especially with such low photoinitiator concentrations encompassed by the invention, and shown by the inventors by way of the examples. It is the combination of inks comprising low photoinitiator concentrations and aminoacrylates with a UV-curing process where the total UV dose is preferably supplied in two or more exposures that satisfactory cure can be achieved with such low photoinitiator concentrations, even where the UV is supplied by UV-LED lamps. A preferred aspect of the invention is that the total UV dose is ≥ 100 mJ/cm², preferably ≥ 150 mJ/cm². In a preferred aspect, the maximum dose of combined UV radiation would be ≤ 1000 mJ/cm². In further preferred aspects of the invention, the total UV dose may be supplied by two or more, three or more, four or more, five or more, or six or more separate exposures. In yet a further aspect of the invention it is preferred that the time between at least two of the separate exposures should be at least 0.1 seconds.

One of the more striking aspects of the invention is that levels as low as 5.0% by weight of a photoinitiator blend, or even lower (e.g. as low as 4.0% by weight), can deliver satisfactory cure when the UV irradiance is delivered in multiple exposures, rather than one single exposure of equivalent total dose. The inventors do not wish to be bound by any theory as to why this may be the case, but conjecture that the presence of one or more acrylated amine(s) helps, in part, in overcoming oxygen inhibition. However, the use of acrylated amines in itself is insufficient to deliver the rather remarkable cure achieved by the invention with such low photoinitiator concentrations, as evidenced by the finding that a single exposure of equivalent dose does not produce the same degree of cure as the multi-exposure approach of the invention. Rather, it is the combination of the acrylated amine with the multi-exposure UV approach that delivers the required cure with commercially acceptable total UV doses. Again, the inventors do not wish to be bound to any particular theory as to why this should be the case, but postulate that superior cure can be achieved when the total dose is supplied in multiple exposures rather than one single exposure due to a number of possible reasons. Firstly, the rate of oxygen ingress into an ink is related to its viscosity. So, an inkjet fluid with its initial low viscosity will be especially prone to oxygen inhibition. By supplying the total dose in a number of separate exposures it can be envisaged that after each exposure, the viscosity of the ink, particularly in the topmost surface exposed to atmospheric oxygen, increases such that the rate of oxygen ingress and hence inhibition decreases after each exposure allowing for improved cure in subsequent exposures. A further reason, and a feature of the invention, is that the use of type II photoinitiators, including diethylthioxanthone (DETX) as used in the examples, is also beneficial to the invention. Such photoinitiators, although known to work in combination with acrylated amines (for example to generate initiating free radicals), may also further benefit the multi-exposure UV processes encompassed by the invention. Again, the inventors do not wish to be held to any theory but postulate that type II photoinitiators may be regenerated to an extent through oxidative processes between each UV exposure (e.g. N. Karaca et.al. in Chapter 1; "Photopolymerisation Initiating Systems", 2018, pp 1-13 (Polymer Chemistry Series, RSC Publication). If this occurs, then it would be clearly beneficial to the multi-UV exposure aspect of the invention since part of the photoinitiator component of the inventive compositions would be regenerated and hence available for subsequent UV irradiations.

In a further aspect of the invention, therefore, the photoinitiator component of the UV-curable inkjet composition preferably comprises a type II photoinitiator, and where the inks are cured under the action of a UV-LED lamp it is preferred that the type II photoinitiator should be selected from any of the thioxanthone family of photoinitiator compounds. In yet a further aspect of the invention the photoinitiator component is formed predominantly of thioxanthone type photoinitiators, with ≥ 50%, ≥ 60%, ≥ 70%, ≥ 80%, ≥ 90% of the photoinitiator blend being formed of thioxanthone type photoinitiators.

Preferably, the photoinitiator blend of the UV-curable inkjet composition comprises diethylthioxanthone (DETX) either alone or in combination with one or more additional photoinitiators. Preferably, the photoinitiator blend of the UV-curable inkjet composition is diethylthioxanthone (DETX) either alone or in combination with one or more additional photoinitiators.

Preferably, the photoinitiator blend of the UV-curable inkjet composition comprises two photoinitiators. Preferably, the photoinitiator blend of the UV-curable inkjet composition comprises (or is) diethylthioxanthone and one other photoinitiator. Preferably the photoinitiator blend of the UV-curable inkjet composition comprises (or is) diethylthioxanthone and an acylphosphine oxide photoinitiator. Preferably, the weight ratio of diethylthioxanthone to acylphosphine oxide photoinitiator is between 5:1 and 1:5, preferably between 3:1 and 1:3.

Inkjet compositions prepared according to the current invention with their low photoinitiator concentrations will have a number of desirable technical advantages compared with the current state-of-the-art and prior art. As well as improved stray light stability and thermal stability through the use of reduced photoinitiator concentrations other advantages include a reduced risk associated with photoinitiator recrystallisation in stored inks and lower odour after cure.

To demonstrate the stray light stability of the inventive and comparative UV-curable inkjet compositions, perhaps more effectively than the methodology described in US9238745, the inventors have devised a new method that relies on measuring the increase in an ink's viscosity after being exposed to visible light followed by storing the inks at raised temperature for extended periods. A 100g sample of ink in a clear glass jar is exposed to ambient light for a total period of 48 hours, with viscosity measurements taken after 24 and 48 hours. The sample is then removed to a dark place for a further two weeks, with measurements taken after one and two weeks. These results are compared to a sample stored in the dark for the full test period, as a reference point.

Unless stated otherwise, viscosity is measured using a Brookfield DVIII Viscometer at 50°C using Spindle 18 at 100rpm.

It is well worth considering what is understood as being satisfactory cure. For most UV-curable inkjet applications this is usually related to a physical attribute of the cured ink. In the case of the surface cure of the ink it is important to assess this by some appropriate means. In the examples the inventors evaluate the (surface) cure by measuring the amount of ink transferred from a print to a blank piece of substrate, using a spectrophotometer, after blocking the print to the blank substrate for 5 sec under a weight of 10 tonnes. Thus, for a poorly surface cured UV-inkjet print there will be significant transfer of ink to the blank contacting substrate, with an associated high color density result for the transferred ink. The findings from this type of testing are particularly relevant to the printing of the graphic arts, where it is important to achieve full cure since products are produced en masse and stacked or rolled in such a way that incomplete cure would damage the finished article, for example a loss of gloss of the print, as well as contamination of the non-printed surface. As print run speeds increase, it has become customary to achieve this level of cure by using, as previously mentioned, as much as 10.0%, or even more in some cases, by weight of blends of photoinitiators in UV-inkjet compositions. This can be problematic as many photoinitiators are increasingly being found to pose risks to human health. The current invention provides a solution to this problem in one sense by reducing the amount of photoinitiators in an ink composition, for example to less than 7.5% by weight, and in a second sense by using photoinitiators that are not currently classed as, or suspected of presenting a significant risk to health, for example by being, toxic, carcinogenic, mutagenic or reprotoxic.

Thus, in a further preferred aspect of the invention only those photoinitiators which do not pose risks associated with carcinogenicity, mutagenicity or reprotoxicity are used. At the time of the invention, for example, there are concerns around the use of certain photoinitiators including diphenyl(2,4,6-trimethylbenzoyl)phosphine oxide (TPO), a photoinitiator that sees very common, widespread (almost universal), use in UV-inkjet compositions, often at concentrations of 4.0% or more, as reflected in the previously described prior art. Accordingly, where diphenyl(2,4,6-trimethylbenzoyl)phosphine oxide is present in the photoinitiator blend of the composition according to the invention it is preferably present in ≤ 4.0% by weight, preferably ≤ 3.0% by weight.

In further aspect of the invention, it has been found that inkjet compositions having preferred viscosities of 15 mPa.s or less can be successfully cured by the inventive methods described herein. Furthermore, UV-inkjet ink compositions prepared according to the invention maintain the other properties required, including adhesion.

The present invention successfully achieves all this without recourse to any additional processes, such as nitrogen inertion, which has been reported in the prior art and is a well-recognized means in the industry of reducing the negative effects of oxygen inertion. In a preferred aspect of the present invention the composition is cured in air. Thus, in a preferred aspect of the present invention the composition is cured without the use of nitrogen inertion, or any other form of inertion or blanketing. Accordingly, in a further preferred aspect of the invention the process of printing and curing an ink composition or the method of preparing a printed article is performed under air and/or does not require the use of nitrogen inertion, or any other form of inertion or blanketing.

In alternative aspects of the invention, nitrogen inertion, or any other form of inertion or blanketing, may be used to help reduce the point of cure oxygen concentration. Indeed, it will be understood by those skilled in the art that the photoinitiator reduction aspects of the invention lend themselves to all means of producing UV-curable inkjet printed articles, including both multi-pass and single-pass inkjet printing operations. Multi-pass refers to more than one pass of the printheads to produce the final printed article. Single-pass refers to a single pass of the printheads. In both cases, multiple exposures to UV radiation is the preferred curing method.

The present invention is directed towards compositions comprising ≥ 20% (w/w) of any blend of monofunctional acrylate monomers. Preferably, the coating and ink compositions, especially inkjet compositions, of the present may also comprise any additional blend of ethylenically unsaturated monomers and oligomers, and especially those monomers and oligomers comprising acrylate groups. The present invention is also directed towards coating and ink compositions having improved stray light (and thermal) stability, especially inkjet compositions, comprising ≥ 20% (w/w) of any blend of monofunctional acrylate monomers, which may also comprise any additional blend of ethylenically unsaturated monomers and oligomers, and especially those monomers and oligomers comprising acrylate groups. As previously mentioned, the present invention is more specifically directed towards UV-curable inkjet compositions where the majority of the polymerisable component is preferably formed of monofunctional monomers.

There is no restriction on the type, blend, or concentration of photoinitiators used, other than those previously mentioned, and can include any of, but not limited to the following free radical photoinitiators (and combinations thereof):
- α-hydroxyketones, such as 1-hydroxy-cyclohexyl-phenyl-ketone; 2-hydroxy-2-methyl-1-phenyl-1-propanone; 2-hydroxy-2-methyl-4' -tert-butyl-propiophenone; 2-hydroxy-4'-(2-hydroxyethoxy)-2-methyl-propiophenone; 2-hydroxy-4'-(2-hydroxypropoxy)-2-methyl-propiophenone; oligo 2-hydroxy-2-methyl-1-[4-(1-methyl-vinyl)phenyl]propanone; bis[4-(2-hydroxy-2-methylpropionyl)phenyl]methane; 2-Hydroxy-1-[1-[4-(2-hydroxy-2-methylpropanoyl)phenyl]-1,3,3-trimethylindan-5-yl]-2-methylpropan-1-one; and 2-Hydroxy-1-[4-[4-(2-hydroxy-2-methylpropanoyl)phenoxy]phenyl]-2-methylpropan-1 -one.
- Acylphosphine oxides, such as 2,4,6-trimethylbenzoyl-diphenylphosphine oxide; ethyl (2,4,6-trimethylbenzoyl)phenyl phosphinate, bis-(2,4,6-trimethylbenzoyl)-phenylphosphine oxide; and bis(2,6-dimethoxybenzoyl)-2,4,4-trimethylpentylphosphinoxide.
- α-aminoketones, such as 2-methyl-1-[4-methylthio)phenyl]-2-morpholinopropan-1-one; 2-benzyl-2-dimethylamino-1-(4-morpholinophenyl)-butan -1-one; and 2-dimethylamino-2-(4-methyl-benzyl)-1-(4-morpholin-4-yl-phenyl)-butan-1-one.
- Thioxanthones, such as 2-4-diethylthioxanthone; isopropylthioxanthone; 2-chlorothioxanthone; and 1-chloro-4-propoxythioxanthone.
- Benzophenones, such as such as benzophenone; 4-phenylbenzophenone; 4-methylbenzophenone; methyl-2-benzoylbenzoate; 4-benzoyl-4-methyldiphenyl sulphide; 4-hydroxybenzophenone; 2,4,6-trimethyl benzophenone; 4,4-bis(diethylamino)benzophenone; benzophenone-2-carboxy(tetraethoxy)acrylate; 4-hydroxybenzophenone laurate; and 1-[-4-[benzoylphenylsulpho]phenyl]-2-methyl-2-(4-methylphenylsulphonyl)propan-1-one.
- Phenylglyoxylates, such as phenyl glyoxylic acid methyl ester; oxy-phenyl-acetic acid 2-[hydroxyl-ethoxy]-ethyl ester; and oxy-phenyl-acetic acid 2-[2-oxo-2-phenyl-acetoxy-ethoxy]-ethyl ester.
- Oxime esters, such as 1-phenyl-1,2-propanedione-2-(O-ethoxycarbonyl)oxime; [1-(4-phenylsulfanylbenzoyl)heptylideneamino]benzoate; and [1-[9-ethyl-6-(2-methylbenzoyl)carbazol-3-yl]-ethylideneamino]acetate.

Examples of other suitable photoinitiators include diethoxy acetophenone; benzil; benzil dimethyl ketal; titanocen radical initiators such as titanium-bis(η) 5-2,4-cyclopentadien-1-yl)-bis-[2,6-difluoro-3-(1H-pyrrol-1-yl)phenyl]; 9-fluorenone; camphorquinone; 2-ethyl anthraquinone; and the like.

A preferred aspect of the invention is that the photoinitiator blend should comprise at least one difunctional, or trifunctional photoinitiator, especially of the acylphosphine oxide type. Examples include, but are not restricted to: difunctional acylphosphine oxide photoinitiators including phenylbis(2,4,6-trimethylbenzoyl)phosphine oxide; and difunctional hydroxyketone photoinitiators including 2-hydroxy-1-[4-[4-(2-hydroxy-2-methylpropanoyl)phenoxy]phenyl]-2-methylpropan-1-one and 2-hydroxy-1-{4-[4-(2-hydroxy-2-methyl-propionyl)-benzyl]-phenyl}-2-methylpropan-1-one.

Where difunctional, trifunctional or multifunctional (including polymeric) acylphosphine oxide photoinitiators are used it is preferred that 4.0%, or less, more preferably 3.0% or less, and most preferably 2.0% or less are used.

The total amount of any photoinitiator blend used in the invention is ≤ 6.0%, preferably ≤ 5.0% or ≤ 4.0%.

The inks of the present invention contain an amine synergist. Aminoacrylates are a particularly favored type of amine synergist encompassed by the invention. Aminoacrylates used in the invention, as previously described in detail, are those derived from the Michael reaction of multifunctional acrylates with alkanolamines, such as ethanolamine, diethanolamine and the like. Multifunctional acrylate monomers used in the preparation of aminoacrylates include, but are not restricted to, hexanediol diacrylate; 3-methylpentanediol diacrylate; ethoxylated trimethylolpropanetriol triacrylate; polyethylene glycol diacrylate; polypropylene glycol diacrylate; ethoxylated pentaerythritol tri- and tetraacrylate; propoxylated glycerol triacrylate; and ethoxylated dipentaerythritol penta- and hexaacrylate. Where alkoxylated monomers are used it should be understood that the invention encompasses any degree of alkoxylation. Also disclosed are aminoacrylate synergists produced by the Michael reaction of difunctional, trifunctional, tetrafunctional, pentafunctional, hexafunctional and higher functional acrylate monomers with any primary and secondary amines.

Aliphatic amines may be used in the manufacture of aminoacrylates and include any from the following non-limiting list: ethylamine; diethylamine; dipropylamine; dibutylamine; and piperazine. Aminoacrylates for use in the invention are derived from the Michael reaction with alkanolamines such as ethanolamine, diethanolamine, N-methylethanolamine and the like.

Examples of other amine synergists, include, but are not limited to, the following:
- Aromatic amines such as 2-(dimethylamino)ethylbenzoate; N-phenyl glycine; benzoic acid, 4-(dimethylamino)-, 1,1'-[(methylimino)di-2,1-ethanediyl] ester; and simple alkyl esters of 4-(N,N-dimethylamino)benzoic acid, with ethyl, amyl, 2-butoxyethyl and 2-ethylhexyl esters being particularly preferred; other positional isomers of N,N-dimethylaminobenzoic acid esters are also suitable.
- Aliphatic amines such as N-methyldiethanolamine, triethanolamine and triisopropanolamine.
- Aminoacrylates and amine modified polyether acrylates, including but not limited to EBECRYL 80, EBECRYL 81, EBECRYL 83, EBECRYL 85, EBECRYL 880, EBECRYL LEO 10551, EBECRYL LEO 10552, EBECRYL LEO 10553, EBECRYL 7100, EBECRYL P115 and EBECRYL P116 available from ALLNEX; CN501, CN550, CN UVA421, CN3705, CN3715, CN3755, CN381 and CN386, all available from Sartomer; GENOMER 5142, GENOMER 5161, GENOMER 5271 and GENOMER 5275 from RAHN; PHOTOMER 4771, PHOTOMER 4967, PHOTOMER 5006, PHOTOMER 4775, PHOTOMER 5662, PHOTOMER 5850, PHOTOMER 5930, and PHOTOMER 4250 all available from IGM, LAROMER LR8996, LAROMER LR8869, LAROMER LR8889, LAROMER LR8997, LAROMER PO 83F, LAROMER PO 84F, LAROMER PO 94F, LAROMER PO 9067, LAROMER PO 9103, LAROMER PO 9106 and LAROMER PO77F, all available from BASF; AGISYN 701, AGISYN 702, AGISYN 703, NeoRad P-81and NeoRad P-85 ex DSM-AGI.

Polymeric photoinitiators and sensitizers are also suitable, including, for example, polymeric aminobenzoates (GENOPOL AB-1 or AB-2 from RAHN, Omnipol ASA from IGM or Speedcure 7040 from Lambson), polymeric benzophenone derivatives (GENOPOL BP-1 or BP-2 from RAHN, Omnipol BP, Omnipol BP2702 or Omnipol 682 from IGM or Speedcure 7005 from Lambson), polymeric thioxanthone derivatives (GENOPOL TX-1 or TX-2 from RAHN, Omnipol TX from IGM or Speedcure 7010 from Lambson), polymeric aminoalkylphenones such as Omnipol 910 from IGM; polymeric benzoyl formate esters such as Omnipol 2712 from IGM; and the polymeric sensitizer Omnipol SZ from IGM.

The use of higher molecular weight photoinitiators may be preferable, due to their likely more benign nature, compared with monomeric low molecular weight photoinitiators. Thus, a further aspect of the invention is that the use of polymeric, polymerisable and multifunctional acylphosphine oxide and polymeric, polymerisable and multifunctional thioxanthone photoinitiators are specifically covered, including their use in UV-LED curable compositions.

The invention also optionally includes the use of thiols, mercapatans and thioethers (including polymeric, multifunctional, polymerisable and dendritic derivatives thereof).

Compositions according to the invention may preferably further comprise any amount of any additional blend of free radically polymerisable monomers and oligomers. Preferably, any additional blend of free radically polymerisable monomers and oligomers is present in an amount of from about 3% to about 50% (w/w), preferably from 5% to 30% (w/w) of the composition.

Examples of suitable monofunctional ethylenically unsaturated monomers, in which a preferred embodiment of the invention should form a major part of the polymerisable component of the inventive compositions, include but are not limited to the following (and combinations thereof), where the terms ethoxylated refers to chain extended compounds through the use of ethylene oxide, propoxylated refers to chain extended compounds through the use of propylene oxide, and alkoxylated refers to chain extended compounds using either or both ethylene oxide and propylene oxide. Equivalent methacrylate compounds are also capable of being used, although those skilled in the art will appreciate that methacrylate compounds have lower reactivity than their equivalent acrylate counterparts:
- Isobutyl acrylate; cyclohexyl acrylate; iso-octyl acrylate; n-octyl acrylate; isodecyl acrylate; iso-nonyl acrylate; octyl/decyl acrylate; lauryl acrylate; 2-propyl heptyl acrylate; tridecyl acrylate; hexadecyl acylate; stearyl acrylate; isostearyl acrylate; behenyl acrylate; tetrahydrofurfuryl acrylate; 4-t-butyl cyclohexyl acrylate; 3,3,5-trimethylcyclohexane acrylate; isobornyl acrylate; dicyclopentyl acrylate; dihydrodicyclopentadienyl acrylate; dicyclopentenyloxyethyl acrylate; dicyclopentanyl acrylate; benzyl acrylate; phenoxyethyl acrylate; 2-hydroxy-3-phenoxypropyl acrylate; alkoxylated nonylphenol acrylate; cumyl phenoxyethyl acrylate; cyclic trimethylolpropane formal acrylate; 2(2-ethoxyethoxy) ethyl acrylate; polyethylene glycol monoacrylate; polypropylene glycol monoacrylate; caprolactone acrylate; ethoxylated methoxy polyethylene glycol acrylate; methoxy triethylene glycol acrylate; tripropyleneglycol monomethyl ether acrylate; diethylenglycol butyl ether acrylate; alkoxylated tetrahydrofurfuryl acrylate; ethoxylated ethyl hexyl acrylate; alkoxylated phenol acrylate; ethoxylated phenol acrylate; ethoxylated nonyl phenol acrylate; propoxylated nonyl phenol acylate; polyethylene glycol o-phenyl phenyl ether acrylate; ethoxylated p-cumyl phenol acrylate; ethoxylated nonyl phenol acrylate; alkoxylated lauryl acrylate; ethoxylated tristyrylphenol acrylate; N-(acryloyloxyethyl)hexahydrophthalimide; N-butyl 1,2 (acryloyloxy) ethyl carbamate; acryloyl oxyethyl hydrogen succinate; octoxypolyethylene glycol acrylate; octafluoropentyl acrylate; 2-isocyanato ethyl acrylate; acetoacetoxy ethyl acrylate; 2-methoxyethyl acrylate; dimethyl aminoethyl acrylate; 2-carboxyethyl acrylate; 4-hydroxy butyl acrylate.

Examples of suitable multifunctional ethylenically unsaturated monomers include but are not limited to the following (and combinations thereof), where the terms ethoxylated refers to chain extended compounds through the use of ethyleneoxide, propoxylated refers to chain extended compounds through the use of propylene oxide, and alkoxylated refers to chain extended compounds using either or both ethylene oxide and propylene oxide. Equivalent methacrylate compounds are also capable of being used, although those skilled in the art will appreciate that methacrylate compounds have lower reactivity than their equivalent acrylate counterparts:
- 1,3-butylene glycol diacrylate; 1,4-butanediol diacrylate; neopentyl glycol diacrylate; ethoxylated neopentyl glycol diacrylate; propoxylated neopentyl glycol diacrylate; 2-methyl-1,3-propanediyl ethoxy acrylate; 2-methyl-1,3-propanediol diacrylate; ethoxylated 2-methyl-1,3-propanediol diacrylate; 3 methyl 1,5- pentanediol diacrylate; 2-butyl-2-ethyl-1,3-propanediol diacrylate; 1,6-hexanediol diacrylate; alkoxylated hexanediol diacrylate; ethoxylated hexanediol diacrylate; propoxylated hexanediol diacrylate; 1,9-nonanediol diacrylate; 1,10 decanediol diacrylate; ethoxylated hexanediol diacrylate; alkoxylated hexanediol diacrylate; diethyleneglycol diacrylate; triethylene glycol diacrylate; tetraethylene glycol diacrylate; polyethylene glycol diacrylate; propoxylated ethylene glycol diacrylate; dipropylene glycol diacrylate; tripropyleneglycol diacrylate; polypropylene glycol diacrylate; poly (tetramethylene glycol) diacrylate; cyclohexane dimethanol diacrylate; ethoxylated cyclohexane dimethanol diacrylate; alkoxylated cyclohexane dimethanol diacrylate; polybutadiene diacrylate; hydroxypivalyl hydroxypivalate diacrylate; tricyclodecanedimethanol diacrylate; 1,4-butanediylbis [oxy(2-hydroxy-3, 1-propanediyl)]diacrylate; ethoxylated bisphenol A diacrylate; propoxylated bisphenol A diacrylate; propoxylated ethoxylated bisphenol A diacrylate; ethoxylated bisphenol F diacrylate; 2-(2-Vinyloxyethoxy)ethyl acrylate; dioxane glycol diacrylate; ethoxylated glycerol triacrylate; glycerol propoxylate triacrylate; pentaerythritol triacrylate; trimethylolpropane triacrylate; caprolactone modified trimethylol propane triacrylate; ethoxylated trimethylolpropane triacrylate; propoxylated trimethylol propane triacrylate; tris (2-hydroxy ethyl) isocyanurate triacrylate; e-caprolactone modified tris (2-hydroxy ethyl) isocyanurate triacrylate; melamine acrylate oligomer; pentaerythritol tetraacrylate; ethoxylated pentaerythritol tetraacrylate; di-trimethylolpropane tetra acrylate; dipentaerythritol pentaaacrylate; dipentaerythritol hexaaacrylate; ethoxylated dipentaerythritol hexaacrylate.

Examples of monomers comprising free-radically polymerisable groups other than acrylate include N-vinyl amides. Examples of N- vinyl amides include but are not limited to N- vinylcaprolactam (NVC), N-vinyl pyrollidone (NVP), diacetone acrylamide, N-vinyl carbazole, N-acryloxyoxy ethylcyclohexanedicarboximide, N-vinyl imidazole, N-vinyl-N-methylacetamide (VIMA) or acryloyl morpholine (ACMO). Vinyl ethers such as 2-(2-vinyloxyethoxy)ethyl(meth)acrylate (VEEA, VEEM), diethylene glycol divinyl ether(DVE2), triethylene glycol divinyl ether (DVE3), ethyl vinyl ether, n-butyl vinyl ether,iso-butyl vinyl ether, tert-butyl vinyl ether, cyclohexyl vinyl ether (CHVE), 2-ethylhexyl vinyl ether (EHVE),dodecyl vinyl ether (DDVE), octadecyl vinyl ether(ODVE), 1-2-butanediol divinyl ether(BDDVE), 1-4,cyclohexanedimethanol divinylether (CHDM-di), hydroxybutyl vinylether (HBVE), 1-4-cyclohexanedimethanolmono vinylether (CHDM-mono), 1,2,4-trivinylcyclohexane (TVCH), vinylphosphonic acid dimethylester (VPA) or vinylphosphonic acid dimethyl ester (VPADME).

As well as, or in place of, free radically-polymerisable monomers, any concentration and type of free-radically polymerisable oligomer, including but not restricted to polyurethane acrylates, polyester acrylates, polyether acrylates and epoxy acrylates may be used. Epoxy acrylates and polyester acrylates are especially preferred classes of material and the use of these is specifically encompassed by the invention, including those produced by the reaction of alkanediol diglycidyl ethers with acrylic acid.

Where the compositions of the invention require colourants, suitable colorants include, but are not limited to organic or inorganic pigments and dyes. The dyes include but are not limited to azo dyes, anthraquinone dyes, xanthene dyes, azine dyes, combinations thereof and the like. Organic pigments may be one pigment or a combination of pigments, such as for instance Pigment Yellow Numbers 12, 13, 14, 17, 74, 83, 114, 126, 127, 150, 155, 174, 180, 188; Pigment Red Numbers 2, 22, 23, 48:1, 48:2, 52, 52:1, 53, 57:1, 112, 122, 166, 170, 184, 202, 266, 269; Pigment Orange Numbers 5, 16, 34, 36, 71; Pigment Blue Numbers 15, 15:3, 15:4; Pigment Violet Numbers 3, 19, 23, 27; and/or Pigment Green Number 7. Inorganic pigments may be one of the following non-limiting pigments: iron oxides, titanium dioxides, chromium oxides, ferric ammonium ferrocyanides, ferric oxide blacks, Pigment Black Number 7 and/or Pigment White Numbers 6 and 7. Other organic and inorganic pigments and dyes can also be employed, as well as combinations that achieve the colors desired.

The energy-curable compositions of the invention may also contain other components which enable them to perform in their intended application. These other ink components include, but are not restricted to; stabilizers, wetting aids, slip agents, inert resins, antifoams, fillers, rheological aids, etc.

The compositions of the invention may also optionally comprise any blend of acrylic polymer or copolymer which is dissolved into it. These polymers are usually prepared by the (thermal) free radical polymerization of blends of monomers including, but not restricted to, styrene, butyl (meth)acrylate, ethyl (meth)acrylate, methyl (meth)acrylate, isobutyl (meth)acrylate. The acrylic polymer preferably has an average molecular weight of less than 20,000 g/mole and more preferably less than 10,000 g/mole. Examples of acrylic polymers include those supplied from Dianal, Elvacite Rohm and Haas and DSM, amongst others. The acrylic polymer is preferably present in the compositions at a concentration of between 2 and 20% (w/w).

Unless stated otherwise, a reference to "molecular weight" or "average molecular weight" is a reference to the number average molecular weight (Mn). The molecular weight is suitably measured by techniques known in the art such as gel permeation chromatography. Preferably, molecular weight is measured by comparison with a polystyrene standard. For instance, molecular weight determination may be conducted on a Hewlett-Packard 1050 Series HPLC system equipped with two GPC Ultrastyragel columns, 103 and 104 Å (5 µm mixed, 300 mm × 19 mm, Waters Millipore Corporation, Milford, MA, USA) and THF as mobile phase. The skilled person will appreciate that this definition of molecular weight applies to polymeric materials which typically have a molecular weight distribution.

Compositions of the current invention are preferably essentially free (i.e. comprise ≤ 10% w/w, preferably ≤ 5% w/w, more preferably ≤ 2% w/w) of any aprotic solvent, and protic solvents with boiling points of less than 150 °C. However, if required, compositions of the current invention can be diluted with such solvents. Both organic and aqueous solvents may be used to dilute the curable compositions of the invention. The preferred maximum amount of any solvent that could be included in an ink composition is 10% (w/w), preferably 5% (w/w), more preferably 2% (w/w).

The compositions prepared according to the invention are particularly suited to the preparation of inkjet printing inks and coatings.

Preferably, the compositions prepared according to the invention are particularly suited to the preparation of pigmented inkjet inks. In an alternative preferred aspect, the compositions prepared according to the invention are suitable for the preparation of nonpigmented coating.

A stabilizer may also be used in the composition to ensure good pot life of the ink, examples of which are nitroxy based stabilizers such as OHTEMPO, TEMPO, and Irgastab UV10; phenolic stabilizers such as hydroquinone (HQ), methyletherhydroquinone (MEHQ), butylhydroxytoluene (BHT) and 2,6-di-tert-butyl-N,N-dimethylamino-p-cresol; nitrosophenylhydroxylamine (NPHA) base inhibitors NPHA; amine salts; and metal salts (Al salt, N-PAL) plus the aromatic amine inhibitors diphenylamine(DPA) and phenylenediamine(PPD). Other suitable stabilizers are florstab UV-1, UV-8, Genorad 16 and 18.

Included in the ink formulation can be a suitable de-aerator, these prevent the formation of air inclusions and pinholes in the cured coating. These also reduce rectified diffusion which can cause reliability issues in the printhead. The following, non-limiting, products are available from EVONIK: TEGO AIREX 900, 910, 916, 920, 931, 936, 940, 944, 945, 950, 962, 980, 986.

Defoamers can also be included in the formulation, these prevent the formation of foam during manufacture of the ink and also while jetting. These are particularly important with recirculating printheads. Suitable, non-limiting, defoamers include TEGO FOAMEX N, FOAMEX 1488, 1495, 3062, 7447, 800, 8030, 805, 8050, 810, 815N, 822, 825, 830,831, 835, 840,842, 843, 845, 855, 860, 883, TEGO FOAMEX K3, TEGO FOAMEX K7/K8 and TEGO TWIN 4000 available from EVONIK. Available from BYK is BYK-066N, 088, 055, 057, 1790, 020, BYK-A 530, 067A, and BYK 354.

Surface Control Additives are often used to control the surface tension of the ink which is required to adjust the wetting on the face plate of the printhead and also to give the desired drop spread on the substrate or and in the case of multi pass inkjet printing wet on dry drop spread. They can also be used to control the level of slip and scratch resistance of the coating. Suitable surface control additives include but are not limited to TEGO FLOW300, 370,425, TEGO GLIDE 100, 110,130,406, 410,411, 415, 420, 432, 435, 440, 482, A115, B1484, TEGO GLIDE ZG 400, TEGO RAD2010, 2011, 2100, 2200N, 2250, 2300, 2500, 2600, 2650, 2700, TEGO TWIN 4000, 4100, TEGO WET 240, 250, 260,265,270, 280, 500, 505, 510 and TEGO WET KL245 all available from EVONIK. Available from BYK are BYK 333,337, BYK UV3500, BYK 378, 347,361, BYK UV3530, 3570, CERAFLOUR 998, 996, NANOBYK 3601, 3610, 3650 and CERMAT 258. From CYTEC EBECRYL 350, 1360, MODAFLOW 9200, EBECRYL 341. From SARTOMER the aliphatic silicone acrylate CN9800 may be used.

The present invention has been described in detail, including the preferred embodiments thereof. However, it will be appreciated that those skilled in the art, upon consideration of the present disclosure, may make modifications and/or improvements on this invention that fall within the scope and spirit of the invention.

### EXAMPLES

The invention is further described by the following non-limiting examples which further illustrate the invention, and are not intended, nor should they be interpreted to, limit the scope of the invention.

To demonstrate the invention (particularly the UV-cure aspects of the invention), a number of pigmented inkjet inks were prepared according to the compositions laid out in in Tables 1, 2 and 3. The inks were blended with a Silverson type high shear blender. To assess the surface cure response 12µm ink layers were applied to Avery Dennison PE Top Trans PE coated label stock and cured using a Nordson belt conveyor equipped with a Phoseon 14W 395nm UV-LED lamp. The belt speed and power input to the lamp were adjusted to achieve single doses of 50 mJ/cm² (or 25 mJ/cm²) per pass in the case of the multi-exposure approach, or single exposures of 150, 200 or 300 mJ/cm² to represent a UV dose equivalent to three, four or six separate exposures of 50 mJ/cm². Further combinations of doses for the multi-exposure approach have also been demonstrated as exemplifiers of the invention, e.g. a first pass of 100 mJ/cm², followed by a second pass of 50 mJ/cm². However, it should be understood by those skilled in the art that the invention covers any number of individual passes, and dose per pass so long as a preferred minimum total dose of 100 mJ/cm² is achieved. The majority of the examples presented here were cured by exposure to the output from a UV-LED lamp, but sufficient examples are provided to show that the invention also applies to multi-exposure using the output from medium pressure UV lamps (H-Bulb). In the case of cure under a UV H-bulb, the inks were cured using a Fusion UV Systems UV-Rig equipped with a medium pressure H-bulb. The belt speed was adjusted to deliver the required UV-doses.

To assess the surface cure, the cured ink films were blocked to the reverse, non-coated, surface of Incada Exel cartonboard substrate and blocked for 5 seconds at 10 tonnes using a Specac hydraulic lab press. The amount of ink transferred to the cartonboard substrate was measured using a X-Rite eXact spectrophotometer, according to the CIE L^{∗}a^{∗}b^{∗} Coordinates, with the ΔL^{∗} value being used as an assessment of surface cure. The ΔL^{∗} value provides an indication of the amount of poorly surface-cured ink which transfers to the cartonboard substrate as a measure of an increase in darkness of the white cartonboard surface. The smaller the ΔL^{∗} value the better the surface cure with values being assessed as follows:
ΔL^{∗} > ± 2.00 is a failing result (e.g. ΔL^{∗} 2.25, ΔL^{∗} -2.25 are both failing)
ΔL^{∗} ± ≤ 2.00 is fair/passing result (e.g. ΔL^{∗} 1.75, ΔL^{∗} -1.75 are both fair/passing)
ΔL^{∗} ± ≤ 1.50 is good/passing result (e.g. ΔL^{∗} 1.25, ^{∗} -1.25 are both good/passing)
ΔL^{∗} ± ≤ 1.00 is an excellent/passing result (e.g. ΔL^{∗} 0.75, ΔL^{∗} -0.75 are both excellent/passing)

**Table 1: Inkjet Ink Compositions and Measurements of Surface Cure**

| MATERIALS | | | C1 | C2 | C3 | C4 | I1 | I2 | I3 | I4 | I5 | I6^{∗} | I7 | I8 | I9 |
|---|---|---|---|---|---|---|---|---|---|---|---|---|---|---|---|
| | | | % | % | % | % | % | % | % | % | % | % | % | % | % |
| CTFA | | | 11.00 | 11.00 | 11.00 | 11.00 | 11.00 | 11.00 | 11.00 | 11.00 | 11.00 | 11.00 | 11.00 | 11.00 | 11.00 |
| PHEA | | | 10.80 | 16.05 | 18.70 | 0.80 | 6.05 | 8.70 | 1105 | 13.70 | 14.05 | 16.70 | 8.70 | 6.45 | 11.45 |
| N VINYL CAPROLACTAM | | | 27.46 | 27.46 | 27.46 | 27.46 | 27.46 | 27.46 | 27.46 | 27.46 | 27.46 | 27.46 | 27.46 | 27.46 | 27.46 |
| IBOA | | | 14.00 | 14.00 | 14.00 | 14.00 | 14.00 | 14.00 | 14.00 | 14.00 | 14.00 | 14.00 | 14.00 | 14.00 | 14.00 |
| DPHA | | | 5.00 | 5.00 | 5.00 | 5.00 | 5.00 | 5.00 | 5.00 | 5.00 | 5.00 | 5.00 | 5.00 | 5.00 | |
| PHOTOMER 4771 | | | | | | 10.00 | 10.00 | 10.00 | 5.00 | 5.00 | 2.00 | 2.00 | 10.00 | 10.00 | 10.00 |
| IRGASTAB UV 25 | | | 1.00 | 1.00 | 1.00 | 1.00 | 1.00 | 1.00 | 1.00 | 1.00 | 1.00 | 1.00 | 1.00 | 1.00 | 1.00 |
| CN9800 | | | 1.00 | 1.00 | 1.00 | 1.00 | 1.00 | 1.00 | 1.00 | 1.00 | 1.00 | 1.00 | 1.00 | 1.00 | 1.00 |
| Magenta Pigment Dispersion | | | 19.24 | 19.24 | 19.24 | 19.24 | 19.24 | 19.24 | 19.24 | 19.24 | 19.24 | 19.24 | 19.24 | 19.24 | 19.24 |
| DETX | | | 3.00 | 1.50 | 0.75 | 3.00 | 1.50 | 0.75 | 1.50 | 0.75 | 1.50 | 0.75 | 0.75 | 3.00 | 3.00 |
| OMNIRAD 819 | | | 2.60 | 1.30 | 0.65 | 2.60 | 1.30 | 0.65 | 1.30 | 0.65 | 1.30 | 0.65 | 1.85 | 1.85 | 1.85 |
| OMNIRAD TPO | | | 4.90 | 2.45 | 1.20 | 4.90 | 2.45 | 1.20 | 2.45 | 1.20 | 2.45 | 1.20 | | | |
| TOTAL | | | 100.00 | 100.00 | 100.00 | 100.00 | 100.00 | 100.00 | 100.00 | 100.00 | 100.00 | 100.00 | 100.00 | 100.00 | 100.00 |
| | | | | | | | | | | | | | | | |

| MATERIALS | | | C1 | C2 | C3 | C4 | I1 | I2 | I3 | I4 | I5 | I6* | I7 | I8 | I9 |
|---|---|---|---|---|---|---|---|---|---|---|---|---|---|---|---|
| | | | % | % | % | % | % | % | % | % | % | % | % | % | % |
| SpecAc transfer (Cure delivered in 50 mJcm⁻² exposures) | 50 mJcm⁻² | ΔL^{∗} | -7.99 | -9.73 | -9.70 | -7.11 | -9.68 | -11.44 | -10.84 | -11.74 | -10.47 | -11.08 | -10.20 | -6.79 | -12.02 |
| | 100 mJcm⁻² | ΔL^{∗} | -1.93 | -5.91 | -5.68 | -1.33 | -2.47 | -8.50 | -4.66 | -9.31 | -5.71 | -7.18 | -6.88 | -0.16 | -2.31 |
| | 150 mJcm⁻² | ΔL^{∗} | -0.54 | -4.23 | -4.47 | -0.21 | -0.06 | -2.92 | -0.65 | -5.03 | -2.73 | | -1.83 | 0.04 | -0.53 |
| | 200 mJcm⁻² | ΔL^{∗} | -0.30 | -6.50 | -7.80 | 0.04 | -0.01 | -2.50 | -0.67 | -4.98 | -2.93 | -6.98 | -0.34 | -0.07 | -0.03 |
| | 300 mJcm⁻² | ΔL^{∗} | -0.18 | -4.73 | -7.07 | 0.03 | -0.02 | -0.70 | -0.05 | -1.80 | -1.27 | -3.49 | 0.05 | 0.09 | 0.26 |
| Notes to Table 1: C1, etc. = Comparative Example; 11, etc. = Inventive Example; CTFA = Cyclic Trimethylolpropane Formal Acrylate; PHEA = 2-Phenoxyethyl acrylate; IBOA = Isobornyl Acrylate; DPHA = Dipentaerythritol Hexaacrylate; Photomer 4771 = Acrylated Amine, based on alkanolamine, ex. IGM Resins; Irgastab UV25 = Stabilizer, ex. BASF; CN9800 = Silicone Acrylate, ex. Sartomer; Magenta Pigment Dispersion = A proprietary 20% dispersion of Magenta Red 202 in PHEA, along with dispersants and stabilizers; DETX = Diethylthioxanthone (type II photoinitiator); Omnirad 819 = A difunctional acylphosphine oxide photoinitiator, ex. IGM Resins; Omnirad TPO = A monofunctional acylphosphine oxide photoinitiator, ex. IGM resins. ^{∗}Though I6 fails the surface cure test with 6 separate 50 mJ/cm2 exposures (a total dose of 300 mJ/cm2), it still represents a major improvement over C3 based on an identical photoinitiator load. | | | | | | | | | | | | | | | |

In Table 1, Comparative Example 1 (C1) represents a monofunctional UV-curable inkjet ink formulated according to current state-of-the-art practices, having a total photoinitiator content of 10.5% (w/w) of the total ink composition. To achieve a good/passing cure result (ΔL ± ≤ 1.50) required three separate exposures of 50 mJ/cm², a total of 150 mJ/cm². As the photoinitiator concentration was halved and quartered (Comparative Examples 2 and 3), it was not possible to achieve satisfactory surface cure, even with six separate 50 mJ/cm² exposures (a total dose of 300 mJ/cm²). Comparative Example 4 shows that when the acrylated amine, Photomer 4771, is substituted into Comparative Example 1 there is a minor improvement in the cure response. The impact of introducing the acrylated amine is better realized at the lower photoinitiator concentrations of Inventive Examples 1 and 2, having total photoinitiator concentrations of 5.25 and 2.6% respectively. Inventive Example 1 delivered excellent/passing surface cure with three 50 mJ/cm² UV exposures (total = 150 mJ/cm²); and Inventive Example 2, with only 2.6% photoinitiator, delivered excellent/passing surface cure with six 50 mJ/cm² UV exposures (total = 300 mJ/cm²). When the acrylated amine concentration was reduced from the 10% present in Inventive Examples 1 and 2 to 5% (Inventive Examples 3 and 4) there was a noticeable reduction in the surface cure, though both exhibited passing results after 6 separate 50 mJ/cm² exposures (a total dose of 300 mJ/cm²). In particular, Inventive Example 3, with 5.25% of total photoinitiator still delivered excellent/passing surface cure at 150 mJ/cm², with Inventive Example 4, having a total photoinitiator concentration of 2.6% providing a fair/passing cure at a total of 300 mJ/cm².

As the acrylated amine concentration is decreased further to 2.0%, (Inventive Examples 5 and 6), a total photoinitiator concentration of 5.25% provides good/passing surface cure with six multiple 50 mJ/cm² exposures (total = 300 mJ/cm²) in Inventive Example 5, whereas Inventive Example 6 with 2.6% total photoinitiator concentration, has failing surface cure with six 50 mJ/cm² exposures. However, in further investigations, the inventors were able to show that Inventive Example 6 (and Inventive Example 5) achieved a fair/passing cure with eight 50 mJ/cm². UV exposures (total = 400 mJ/cm²).

A key feature of the invention is represented by Inventive Examples 7 to 9, where the TPO component is replaced with the difunctional photoinitiator, Omnirad 819. Comparing Inventive Example 7 with Inventive Example 2 shows the improvement in the cure response achieved with the difunctional photoinitiator. Inventive Example 8 shows that if extra DETX is introduced a significant enhancement in cure is achieved compared with Inventive Example 7. Furthermore, Inventive Example 8 achieves superior cure compared with the state-of-the-art control, Comparative Example 1. Indeed, with only a total photoinitiator concentration of 4.85%, Inventive Example 8 achieved superior cure to all other examples, with excellent/passing surface cure after only two 50 mJ/cm² exposures under the UV-LED lamp. Inventive Example 9 shows that satisfactory cure can be achieved by employing inventive aspects in an ink comprising solely of monofunctional monomers, with the 5.0% DPHA of Inventive Example 8 being replaced with the monofunctional monomer, PHEA.

It should be noted that in all cases the through cure (as determined by the well-recognized scratch test) of the Inventive Examples was excellent after two 50 mJ/cm². exposures.

Table 1A shows how a number of the inks described in Table 1 respond to exposure to single doses of 150, 200 and 300 mJ/cm².

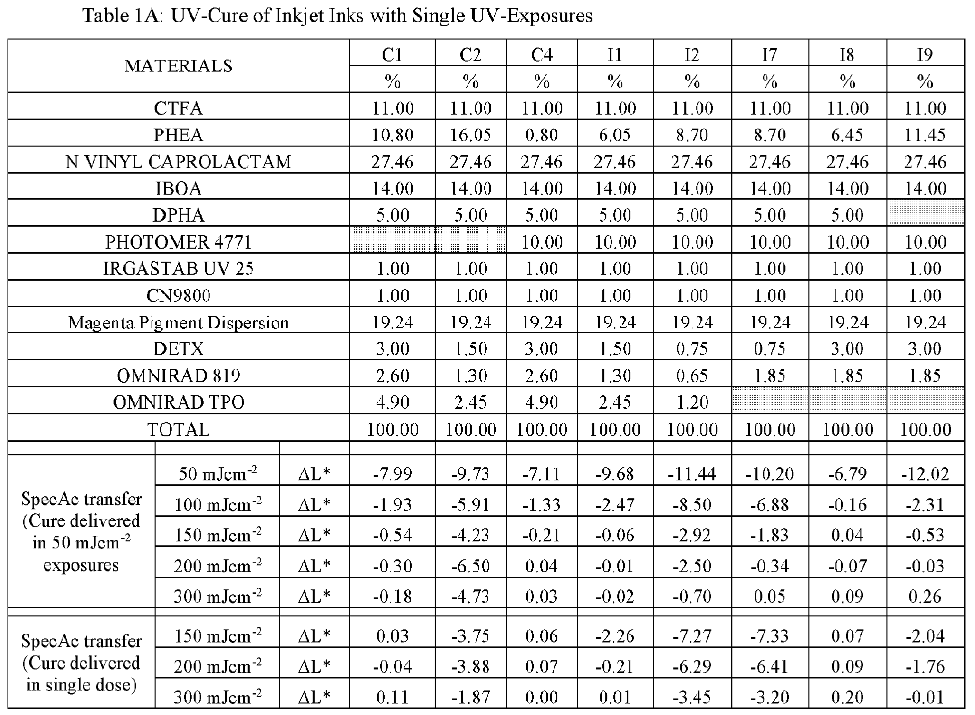

It is evident from Table 1A that for Inventive Examples 1, 2, 7 and 9 there is clear benefit from applying the total UV dose in a number of separate exposures. Although Inventive Example 8 successfully delivers satisfactory cure with a single dose of 150 mJ/cm² it failed to do so with a single dose of 100 mJ/cm². Furthermore, when the multifunctional monomer, DPHA, was removed from Inventive Example 8 (Inventive Example 9) then the multi-exposure process delivers acceptable surface cure with a dose of 150 mJ/cm², compared with the 300 mJ/cm² of the single exposure experiment. The most surprising result from Tables 1 and 1A is that it is possible to achieve satisfactory cure, with total UV doses of less than 200 and certainly less than 300 mJ/cm² via the multi-exposure process of the invention with photoinitiator levels as low 2.6%, Inventive Examples 2 and 7.

Table 2 shows the surface cure results for a series of cyan inks comprising different acrylated amines and a comparative composition comprising the aromatic amine synergist, EDB.

**Table 2: Cyan Inkjet Compositions: Impact of Different Amine Synergists**

| MATERIALS | | | I10 | I11 | I12^{‡} | I13^{‡} | C5 |
|---|---|---|---|---|---|---|---|
| | | | % | % | % | % | % |
| CTFA | | | 14.50 | 14.50 | 14.50 | 14.50 | 14.50 |
| PHEA | | | 48.27 | 48.27 | 48.27 | 48.27 | 48.27 |
| N VINYL CAPROLACTAM | | | 15.00 | 15.00 | 15.00 | 15.00 | 15.00 |
| PHOTOMER 4771 | | | 6.50 | | | | |
| EBECRYL LEO 10552 | | | | 6.50 | | | |
| EBECRYL P116 | | | | | 6.50 | | |
| CN3715 | | | | | | 6.50 | |
| SPEEDCURE EDB | | | | | | | 6.50 |
| IRGASTAB UV 25 | | | 1.00 | 1.00 | 1.00 | 1.00 | 1.00 |
| CN9800 | | | 1.00 | 1.00 | 1.00 | 1.00 | 1.00 |
| Cyan Pigment Dispersion | | | 9.73 | 9.73 | 9.73 | 9.73 | 9.73 |
| DETX | | | 2.00 | 2.00 | 2.00 | 2.00 | 2.00 |
| OMNIRAD 819 | | | 2.00 | 2.00 | 2.00 | 2.00 | 2.00 |
| TOTAL | | | 100.00 | 100.00 | 100.00 | 100.00 | 100.00 |
| | | | | | | | |
| | 150 mJcm⁻² | ΔL^{∗} | -0.57 | -1.18 | -3.39 | -0.89 | -6.65 |
| SpecAc Transfer Results for UV-LED Dose delivered in 50 mJcm⁻² exposures | 300 mJcm⁻² | ΔL^{∗} | -0.01 | -0.15 | -1.37 | -0.22 | -10.59 |
| Notes to Table 2: Ebecryl LEO10552 = Acrylated Amine produced from an alkanolamine, ex. Allnex; Ebecryl P116 = Acrylated amine derived from an alkylamine, ex. Allnex; CN3715 = Acrylated amine derived from an alkylamine, ex. Sartomer; Speedcure EDB = Ethyl-4-(dimethylamino)benzoate; an aminobenzoate amine synergist, ex. Lambson Cyan Pigment Dispersion = 25% dispersion of Pigment Blue 15:4 in PHEA, along with dispersants and stabilizers. *Reference Example. | | | | | | | |

The results in Table 2 show that all the inks comprising acrylated amines were much more successful in delivering acceptable surface cure than the ink comprising the aromatic aminobenzoate, Comparative Example 5. The surface cure of Comparative Example 5 was so poor that it led to very tacky surfaces, even at high total UV doses resulting in variable transfer results.

The best cure result was achieved with Photomer 4771, an acrylated amine derived from ethanolamine. This supports a specific preferred aspect of the invention regarding the use of acrylated amines derived from the Michael reaction of alkanolamines with multifunctional acrylate monomers, specifically the reaction of hexanediol diacrylate with ethanolamine.

To demonstrate the benefit of yet a further optional feature of the invention, a series of cyan inks based on Inventive Example 10 were prepared where the ratio of DETX to Omnirad 819 was varied, as laid out in Table 3. A further example was prepared based on Inventive Example 10, but with 1.0% of the additional photoinitiator Esacure KIP 160 added.

**Table 3: Cyan Inkjet Compositions Demonstrating the Effects of Photoinitiator Blend Ratios**

| MATERIALS | | | I15 | I16 | I17 | I18 | I19 | I20 |
|---|---|---|---|---|---|---|---|---|
| | | | % | % | % | % | % | % |
| CTFA | | | 14.50 | 14.50 | 14.50 | 14.50 | 14.50 | 14.50 |
| PHEA | | | 48.27 | 48.27 | 48.27 | 48.27 | 48.27 | 47.27 |
| N VINYL CAPROLACTAM | | | 15.00 | 15.00 | 15.00 | 15.00 | 15.00 | 15.00 |
| PHOTOMER 4771 | | | 6.50 | 6.50 | 6.50 | 6.50 | 6.50 | 6.50 |
| IRGASTAB UV 25 | | | 1.00 | 1.00 | 1.00 | 1.00 | 1.00 | 1.00 |
| CN9800 | | | 1.00 | 1.00 | 1.00 | 1.00 | 1.00 | 1.00 |
| Cyan Pigment Dispersion | | | 9.73 | 9.73 | 9.73 | 9.73 | 9.73 | 9.73 |
| DETX | | | 4.00 | 3.00 | 2.00 | 1.00 | | 2.00 |
| OMNIRAD 819 | | | | 1.00 | 2.00 | 3.00 | 4.00 | 2.00 |
| ESACURE KIP 160 | | | | | | | | 1.00 |
| TOTAL | | | 100.00 | 100.00 | 100.00 | 100.00 | 100.00 | 100.00 |
| | | | | | | | | |
| SpecAc transfer (Cure delivered in 50 mJcm⁻² exposures | 50 mJcm⁻² | ΔL^{∗} | -22.80 | -28.20 | -12.23 | -12.57 | -15.11 | -11.97 |
| | 100 mJcm⁻² | ΔL^{∗} | -38.00 | -1.60 | -1.30 | -1.79 | -5.24 | -1.10 |
| | 150 mJcm⁻² | ΔL^{∗} | -24.10 | -0.37 | -0.44 | -0.55 | -2.37 | -0.44 |
| | 200 mJcm⁻² | ΔL^{∗} | -1.23 | 0.03 | -0.08 | -0.67 | -1.87 | -0.15 |
| | 300 mJcm⁻² | ΔL^{∗} | -0.02 | -0.08 | 0.11 | -0.09 | -0.94 | 0.10 |
| Notes to Table 3: Esacure KIP160 = A difunctional hydroxyketone photoinitiator, ex. IGM Resins | | | | | | | | |

All the inks in Table 3 produced excellent/passing surface cure after 6 exposures of 50 mJ/cm², even the composition based entirely on the type II photoinitiator, DETX. This lends support to the postulate that type II photoinitiators may be oxidatively regenerated between individual UV exposures to the benefit of subsequent UV-curing. Indeed, at the higher exposures, hence increased number of individual exposures, Inventive Example 15 is, if anything, superior to Inventive Example 19, the ink based solely on the difunctional acylphosphine oxide photoinitiator, Omnirad 819. However, what is clear from the results in Table 3 is that superior cure response is achieved when a blend of the two photoinitiators is used, thereby supporting a further optional feature of the current invention. Again, satisfactory cure is achieved at commercially acceptable total UV doses by employing the features of the current invention, with photoinitiator concentrations of 5.0% (w/w) or less of the total ink composition.

To show that inks prepared according to the current invention also achieve satisfactory cure when exposed to the emission from conventional medium pressure mercury lamps, Inventive Examples 17 and 20 were exposed to multi-exposures of 50 mJ/cm², according to the method previously described. After one 50 mJ/cm² exposure the ΔL* ink transfer results were -12.42 and -10.81 respectively and after 2 exposures, 0.04 and 0.10, respectively.

To show that UV-inkjet compositions prepared according to the current invention have improved light stability compared with inks prepared according to current, accepted, practices whilst delivering acceptable cure responses via the inventive method a series of cyan, magenta, yellow and black inks were prepared as laid out in Table 4. The UV-LED cure response was determined as previously described via either a single UV-LED dose of 150 mJ/cm², or via three separate 50 mJ/cm² doses to illustrate the inventive process.

**Table 4: Surface Cure of Cyan, Magenta, Yellow and Black Compositions**

| MATERIALS | | | C6 | C7 | C8 | C9 | I21 | I22^{∗} | I23 | I24 |
|---|---|---|---|---|---|---|---|---|---|---|
| | | | Cyan | Magenta | Yellow | Black | Cyan | Magenta | Yellow | Black |
| | | | % | % | % | % | % | % | % | % |
| CTFA | | | 14.50 | 13.00 | 17.42 | 9.94 | 14.50 | 13.00 | 17.42 | 9.94 |
| PHEA | | | 42.27 | 28.75 | 42.31 | 38.00 | 43.97 | 32.45 | 44.01 | 40.60 |
| PHOTOMER 4771 | | | 3.00 | 3.00 | 3.00 | 3.00 | 8.00 | 8.00 | 8.00 | 8.00 |
| N VINYL CAPROLACTAM | | | 15.00 | 25.00 | 15.00 | 25.00 | 15.00 | 25.00 | 15.00 | 25.00 |
| DPHA | | | | | | 1.00 | | | | 1.00 |
| CN965 (EU) | | | 3.00 | | 2.50 | 1.00 | 3.00 | | 2.50 | 1.00 |
| IRGASTAB UV 25 | | | 1.00 | 1.00 | 1.00 | | 1.00 | 1.00 | 1.00 | |
| GENORAD 26 | | | | | | 1.00 | | | | 1.00 |
| CN9800 | | | 1.00 | 1.00 | 1.00 | 1.00 | 1.00 | 1.00 | 1.00 | 1.00 |
| UV CYAN PASTE PB15.4 | | | 9.73 | | | | 9.73 | | | |
| UV MAGENTA PASTE PV19 | | | | 15.75 | | | | 15.75 | | |
| UV YELLOW PASTE PY150 | | | | | 7.27 | | | | 7.27 | |
| UV BLACK PASTE PBK7 | | | | | | 8.66 | | | | 8.66 |
| TPO | | | 4.90 | 4.90 | 4.90 | 4.90 | | | | |
| DETX | | | 3.00 | 3.00 | 3.00 | 3.00 | 2.50 | 2.50 | 2.50 | 2.50 |
| OMNIRAD 184 | | | | 2.00 | | | | | | |
| BAPO | | | 2.60 | 2.60 | 2.60 | 3.50 | 1.30 | 1.30 | 1.30 | 1.30 |
| TOTAL | | | 100.00 | 100.00 | 100.00 | 100.00 | 100.00 | 100.00 | 100.00 | 100.00 |
| | | | | | | | | | | |
| SpecAc transfer Results for UV-LED Dose delivered in 3 50 mJ/cm² exposures | 150 mJ/cm² | ΔL^{∗} | 3.70 | 4.57 | 3.70 | 0.94 | 1.81 | 2.77 | 0.94 | 0.52 |

| MATERIALS | | | C6 | C7 | C8 | C9 | I21 | I22* | I23 | I24 |
|---|---|---|---|---|---|---|---|---|---|---|
| | | | Cyan | Magenta | Yellow | Black | Cyan | Magenta | Yellow | Black |
| | | | % | % | % | % | % | % | % | % |
| SpecAc transfer Results for UV-LED Dose delivered in 1 150 mJ/cm². exposure | 150 mJ/cm². | ΔL^{∗} | 1.85 | 2.41 | 2.84 | 0.32 | 32.69 | 19.13 | 15.62 | 3.24 |
| *Though Example I22 did not pass the surface cure test with three 50 mJ/cm². exposures, it still demonstrates 2 aspects of the present invention: (1) I22 has a better surface cure result than its comparative Example C7 equivalent at three 50 mJ/cm². exposures, despite I22 having a much lower photoinitiator content; and (2) I22 exhibits a far better cure response with three 50 mJ/cm². exposures when compared to a single 150 mJ/cm². exposure. | | | | | | | | | | |
| Notes to Table 4: CN965 = Urethane acrylate, ex. Sartomer; Genorad 26 = Stabilizer, ex. Rahn; TPO = Omnirad TPO; Omnirad 184 = Photoinitiator, ex. IGM Resins (Hydroxycyclohexyl phenyl ketone); BAPO = Irgacure 819, ex. IGM Resins; Pigment Dispersion = proprietary dispersions. The cyan and magenta dispersions are as previously described. The yellow and black pigment dispersions were again dispersed in PHEA. | | | | | | | | | | |

Noteworthy in Table 4 is that the Inventive Ink samples have superior cure compared with the respective comparative control ink examples after being exposed to three individual 50 mJ/cm² doses from the UV-LED light source. Furthermore, the cure response of the Inventive Examples is far superior when the UV dose is supplied as three individual 50 mJ/cm² doses compared with a single dose of 150 mJ/cm². These results support one aspect of the invention.

### Improved Stray Light Stability

To assess the improved stray light stability achieved by the inventive inks, the initial viscosity of each ink example from Table 4 (C6-C9 and I21-I24) was recorded in Table 4A. 100g ink samples were then placed in clear glass jars and exposed to diffuse ambient light over a 48-hour period. The samples were then stored in a dark environment for 2 weeks and the viscosities remeasured. A bigger viscosity rise is undesirable as it is indicative of premature polymerization as a result of inferior stray light resistance. A lower viscosity rise is desirable as it is indicative of less polymerization and improved stray light resistance. Stray light results can be found in Table 4A.

**Table 4A: Stray Light Stability**

| Test point | C6 Cyan | | C7 Magenta | | C8 Yellow | | C9 Black | | I21 Cyan | | I22 Magenta | | I23 Yellow | | I24 Black | |
|---|---|---|---|---|---|---|---|---|---|---|---|---|---|---|---|---|
| | Viscosity / cP | % change | Viscosity / cP | % change | Viscosity / cP | % change | Viscosity / cP | % change | Viscosity / cP | % change | Viscosity / cP | % change | Viscosity / cP | % change | Viscosity / cP | % change |
| Initial | 9.15 | N/A | 9.12 | N/A | 8.79 | N/A | 8.58 | N/A | 9.24 | N/A | 9.24 | N/A | 9.27 | N/A | 8.76 | N/A |
| 2 weeks (stored in dark) | 16 | 75% | 13.9 | 52% | 17.8 | 103% | 9.66 | 13% | 10.1 | 9% | 9.66 | 45% | 10.4 | 12% | 9.75 | 11% |
| Notes to Table 4A: the comparative examples and inventive examples pair off, thus C6 is directly comparable to I21; C7 with I22; C8 with I23; and C9 with I24; Viscosity was measured using a Brookfield DVIII Viscometer at 50°C using Spindle 18 at 100 rpm. | | | | | | | | | | | | | | | | |

Noteworthy about Table 4A is the improved stray light stability of the inventive inks compared with the comparative ink examples. The inventive cyan and yellow inks (I21 and I23), in particular, show significantly better stray light stability than their comparative examples (C6 and C8). The inventive magenta and black inks (I22 and I24) also show improved stray light stability compared with their respective comparative examples (C7 and C9). The relatively good results for both black examples (C9 and I24) can probably be explained by the high UV absorption of the black pigment providing a degree of stray light protection. The relatively poor result for the magenta I22 (and its Comparative example C7) may be due, in part, to the high transparency of the pigment in the UVB and UVA regions of the UV spectrum.

Since stray light resistance differs by color, it would be useful to ascribe preferred ranges of % viscosity change for each of cyan, yellow, magenta, and black process inks, such as those shown in Tables 4 and 4A:
Process cyan - preferred viscosity change is ≤ 20%, more preferably ≤ 15%; most preferably ≤ 10%
Process magenta - preferred viscosity change is ≤ 55%, more preferably ≤ 50%; most preferably ≤ 45%
Process yellow - preferred viscosity change is ≤ 23%, more preferably ≤ 18%; most preferably ≤ 13%
Process black - preferred viscosity change is ≤ 20%, more preferably ≤ 15%; most preferably ≤ 12%

## Claims

1. A UV-curable inkjet composition comprising:
≥ 20% (w/w) of any blend of monofunctional acrylate monomers;
≤ 6.0% (w/w) of any blend of photoinitiators; and
one or more acrylated amine(s); wherein the one or more acrylated amine(s) is derived from the Michael reaction of one or more multifunctional acrylate monomer(s) or oligomer(s) with one or more alkanolamine(s).

2. The composition according to claim 1 wherein:
(a) the composition comprises ≤ 5.0% (w/w) of any blend of photoinitiators, more preferably comprising ≤ 4.0% (w/w) of any blend of photoinitiators;
(b) the composition comprises 2.5-6.0% (w/w) of any blend of photoinitiators
(c) the photoinitiator blend comprises an acylphosphine oxide photoinitiator, a thioxanthone photoinitiator or a combination thereof;
(d) the photoinitiator blend comprises an acylphosphine oxide photoinitiator; and/or
(e) the photoinitiator blend comprises a thioxanthone photoinitiator.

3. The composition according to claim 2 wherein:
(a) the acylphosphine oxide photoinitiator is selected from the group consisting of diphenyl(2,4,6-trimethylbenzoyl)phosphine oxide, phenylbis(2,4,6-trimethylbenzoyl)phosphine oxide, ethyl (2,4,6-trimethylbenzoyl) phenylphosphinate, bis(2,6-dimethoxybenzoyl)-2,4,4-trimethylpentylphosphinoxide, any multifunctional acylphosphine oxide, polymerizable acylphosphine oxide or polymeric acylphosphine oxide, and combinations thereof; and/or
(b) the acylphosphine oxide photoinitiators is present in ≤ 5.0% (w/w), preferably ≤ 4.0% (w/w), more preferably ≤ 3.0% (w/w); or
(c) the thioxanthone photoinitiator is selected from the group consisting of isopropyl thioxanthone, diethylthioxanthone (DETX), chloropropylthioxanthone, chlorothioxanthone, any multifunctional thioxanthone, polymerizable thioxanthone or polymeric thioxanthone, and combinations thereof.

4. The composition according to any preceding claim wherein:
(a) the photoinitiator blend comprises one or more type II photoinitiators, preferably diethylthioxanthone (DETX);
(b) the composition comprises ≥ 1% (w/w), preferably ≥ 2.0% (w/w), more preferably ≥ 3% (w/w) of one or more acrylated amine(s);
(c) the composition comprises ≥ 4.0% (w/w) of any blend of alkanolamine derived acrylated amines; and/or
(d) the one or more acrylated amine(s) is derived from the Michael reaction of ethanolamine with any blend of multifunctional acrylate, preferably any blend of difunctional and trifunctional acrylate monomers, preferably wherein the multifunctional acrylate is selected from the group consisting of hexanediol diacrylate, 3-methylpentanediol diacrylate, ethoxylated trimethylolpropane triacrylate, glycerol propoxylate triacrylate, or combinations thereof.

5. The composition according to any of claims 1 - 4, wherein the acrylated amine is derived from the Michael reaction of diethanolamine with any blend of difunctional, trifunctional, tetrafunctional, or higher functional acrylate monomers or oligomers or wherein the acrylated amine is derived from the Michael reaction of any blend of ethanolamine and diethanolamine with ethoxylated trimethylolpropane triacrylate.

6. The composition according to any of claims 1 - 4 wherein the acrylated amine is derived from the reaction of ethanolamine with any blend of hexanediol diacrylate and 3-methylpentanediol diacrylate or wherein the acrylated amine is derived from the reaction of ethanolamine with any blend of poly(ethylene glycol) diacrylates and poly(propylene glycol) diacrylates.

7. The composition according to any preceding claim wherein:
(a) the composition is an inkjet ink composition;
(b) the composition comprises ≥ 30% (w/w) of any blend of monofunctional monomers, preferably ≥ 40% (w/w) of any blend of monofunctional monomers; and/or
(c) the composition comprises ≤ 40% any blend of multifunctional monomers, preferably ≤ 30% any blend of multifunctional monomers, preferably ≤ 20% any blend of multifunctional monomers, more preferably ≤ 10% any blend of multifunctional monomers preferably, wherein the multifunctional monomer is a reaction product of alkanedioldiglycidyl ethers with acrylic acid.

8. The composition according to any preceding claim further comprising:
(a) an epoxy acrylate, preferably wherein the epoxy acrylate is the reaction product of an alkanediol diglycidyl ether with acrylic acid;
(b) a polyester acrylate, preferably wherein the polyester acrylate has an acrylate functionality of three or less;
(c) an inert acrylic resin; and/or
(d) one or more colorants.

9. The composition according to any preceding claim wherein the composition is:
(a) a process cyan ink having a stray light viscosity change of ≤ 20%, preferably ≤ 15%, more preferably ≤ 10%;
(b) a process magenta ink having a stray light viscosity change of ≤ 55%, preferably ≤ 50%, more preferably ≤ 45%;
(c) a process yellow ink having a stray light viscosity change of ≤ 23%, preferably ≤ 18%, more preferably ≤ 13%; or
(d) a process black ink having a stray light viscosity change of ≤ 20%, preferably ≤ 15%, more preferably ≤ 12%.

10. The composition according to any preceding claim, wherein the composition can be cured by exposure to two or more separate UV irradiations, where the sum total of all the separate UV exposures is ≥ 100 mJ/cm². and/or wherein the composition is suitable for application by UV-curable inkjet printing.

11. A process of printing and curing an ink composition, comprising applying the composition of any preceding claim onto a substrate and curing, preferably wherein the application method is inkjet printing.

12. The process of claim 11, wherein curing is performed by exposure to two or more separate UV irradiations and/or wherein the sum total of all separate UV exposures is ≥ 100 mJ/cm².

13. A method of providing a printed article, comprising inkjet printing an inkjet composition of any one of claims 1 to 10 onto a substrate and curing the composition by exposure to two or more separate UV irradiations, wherein the sum total of all the separate UV exposures is ≥ 100 mJ/cm².

14. The process of claims 11 or 12 or the method of claim 13, wherein the total dose from all the UV exposures is ≤ 1000 mJ/cm². preferably, wherein the total dose from all the UV exposures is ≤ 750 mJ/cm², preferably ≤ 500 mJ/cm², more preferably ≤ 300 mJ/cm², even more preferably ≤ 200 mJ/cm².

15. The process according to any of claims 12 or 14, or the method according to any of claims 13 or 14, wherein:
(a) the ink is cured by four or more separate UV exposures;
(b) the time between at least two successive exposures is at least 0.1 seconds;
(c) at least one of the separate UV irradiations is provided by a UV-LED light source; and/or
(d) curing is solely under the action of the emissions from UV-LED light sources.

16. The process according to any of claims 11, 12, 14 or 15, or the method according to any of claims 13-15, which is cured via a multi-pass inkjet printing process or which is cured via a single pass inkjet printing process.

17. A printed article prepared by the process according to any of claims 11, 12 or 14-16, or the method according to any of claims 13-16.

## Patentansprüche

1. UV-härtbare Tintenstrahlzusammensetzung, umfassend:
≥ 20 % (Gew./Gew.) von jedwedem Gemisch aus monofunktionellen Acrylatmonomeren;
≤ 6,0 % (Gew./Gew.) von jedwedem Gemisch aus Photoinitiatoren; und
ein oder mehrere acrylierte Amin(e); wobei das eine oder die mehreren acrylierte(n) Amin(e) von der Michael-Reaktion von einem oder mehreren multifunktionellen Acrylatmonomer(en) oder Oligomer(en) mit einem oder mehreren Alkanolamin(en) abgeleitet ist/sind.

2. Zusammensetzung nach Anspruch 1, wobei:
(a) die Zusammensetzung ≤ 5,0 % (Gew./Gew.) von jedwedem Gemisch aus Photoinitiatoren, bevorzugter umfassend ≤ 4,0 % (Gew./Gew.) von jedwedem Gemisch aus Photoinitiatoren, umfasst;
(b) die Zusammensetzung 2,5 bis 6,0 % (Gew./Gew.) von jedwedem Gemisch aus Photoinitiatoren umfasst;
(c) das Photoinitiatorgemisch einen Acylphosphinoxid-Photoinitiator, einen Thioxanthon-Photoinitiator oder eine Kombination davon umfasst;
(d) das Photoinitiatorgemisch einen Acylphosphinoxid-Photoinitiator umfasst; und/oder
(e) das Photoinitiatorgemisch einen Thioxanthon-Photoinitiator umfasst.

3. Zusammensetzung nach Anspruch 2, wobei:
(a) der Acylphosphinoxid-Photoinitiator ausgewählt ist aus der Gruppe bestehend aus Diphenyl(2,4,6-trimethylbenzoyl)phosphinoxid, Phenylbis(2,4,6-trimethylbenzoyl)phosphinoxid, Ethyl(2,4,6-trimethylbenzoyl)phenylphosphinat, Bis(2,6-dimethoxybenzoyl)-2,4,4-trimethylpentylphosphinoxid, jedwedem multifunktionellen Acylphosphinoxid, polymerisierbarem Acylphosphinoxid oder polymerem Acylphosphinoxid, und Kombinationen davon; und/oder
(b) die Acylphosphinoxid-Photoinitiatoren in ≤ 5,0 % (Gew./Gew.), vorzugsweise ≤ 4,0 % (Gew./Gew.), bevorzugter ≤ 3,0 % (Gew./Gew.) vorhanden sind; oder
(c) der Thioxanthonphotoinitiator ausgewählt ist aus der Gruppe bestehend aus Isopropylthioxanthon, Diethylthioxanthon (DETX), Chlorpropylthioxanthon, Chlorthioxanthon, jedwedem multifunktionellem Thioxanthon, polymerisierbarem Thioxanthon oder polymerem Thioxanthon und Kombinationen davon.

4. Zusammensetzung nach einem der vorhergehenden Ansprüche, wobei:
(a) das Photoinitiatorgemisch einen oder mehrere Typ II-Photoinitiatoren, vorzugsweise Diethylthioxanthon (DETX) umfasst;
(b) die Zusammensetzung ≥ 1 % (Gew./Gew.), vorzugsweise ≥ 2,0 % (Gew./Gew.), bevorzugter ≥ 3 % (Gew./Gew.) von einem oder mehreren acrylierten Amin(en) umfasst;
(c) die Zusammensetzung ≥ 4,0 % (Gew./Gew.) von jedwedem Gemisch aus von Alkanolamin abgeleiteten acrylierten Aminen umfasst; und/oder
(d) das eine oder die mehreren acrylierten Amin(e) abgeleitet ist/sind von der Michael-Reaktion von Ethanolamine mit jedwedem Gemisch aus multifunktionellem Acrylat, vorzugsweise jedwedem Gemisch aus difunktionellen und trifunktionellen Acrylatmonomeren; wobei vorzugsweise das multifunktionelle Acrylat ausgewählt ist aus der Gruppe bestehend aus Hexandioldiacrylat, 3-Methylpentandioldiacrylat, ethoxyliertem Trimethylolpropantriacrylat, Glycerinpropoxylattriacrylat oder Kombinationen davon.

5. Zusammensetzung nach einem der Ansprüche 1 bis 4, wobei das acrylierte Amin abgeleitet ist von der Michael-Reaktion von Diethanolamin mit jedwedem Gemisch aus difunktionellen, trifunktionellen, tetrafunktionellen oder höherfunktionellen Acrylatmonomeren oder - oligomeren, oder wobei das acrylierte Amin von der Michael-Reaktion von jedwedem Gemisch aus Ethanolamin und Diethanolamin mit ethoxyliertem Trimethylolpropantriacrylat abgeleitet ist.

6. Zusammensetzung nach einem der Ansprüche 1 bis 4, wobei das acrylierte Amin von der Reaktion von Ethanolamin mit jedwedem Gemisch von Hexandioldiacrylat und 3-Methylpentandioldiacrylat abgeleitet ist, oder wobei das acrylierte Amin aus der Reaktion von Ethanolamin mit jedwedem Gemisch aus Polyethylenglykol)diacrylaten und Poly(propylenglykol)diacrylaten abgeleitet ist.

7. Zusammensetzung nach einem der vorhergehenden Ansprüche, wobei:
(a) die Zusammensetzung eine Tintenstrahltintenzusammensetzung ist;
(b) die Zusammensetzung ≥ 30 % (Gew./Gew.) von jedwedem Gemisch aus monofunktionellen Monomeren, vorzugsweise ≥ 40 % (Gew./Gew.) von jedwedem Gemisch aus monofunktionellen Monomeren umfasst; und/oder
(c) die Zusammensetzung ≤ 40 % von jedwedem Gemisch aus multifunktionellen Monomeren, vorzugsweise ≤ 30 % von jedwedem Gemisch aus multifunktionellen Monomeren, vorzugsweise ≤ 20 % von jedwedem Gemisch aus multifunktionellen Monomeren, bevorzugter ≤ 10 % von jedwedem Gemisch aus multifunktionellen Monomeren umfasst, wobei vorzugsweise das multifunktionelle Monomer ein Reaktionsprodukt von Alkandioldiglycidylethern mit Acrylsäure ist.

8. Zusammensetzung nach dem vorhergehenden Anspruch, des Weiteren umfassend:
(a) ein Epoxyacrylat, wobei vorzugsweise das Epoxyacrylat das Reaktionsprodukt eines Alkandioldiglycidylethers mit Acrylsäure ist;
(b) ein Polyesteracrylat, wobei vorzugsweise das Polyesteracrylat eine Acrylatfunktionalität von drei oder weniger hat;
(c) ein inertes Acrylharz; und/oder
(d) ein oder mehrere Färbungsmittel.

9. Zusammensetzung nach einem der vorhergehenden Ansprüche, wobei die Zusammensetzung ist:
(a) eine cyanfarbene Prozesstinte mit einer Streulicht-Viskositätsänderung von ≤ 20 %, vorzugsweise ≤ 15 %, bevorzugter ≤ 10 %;
(b) eine magentafarbene Prozesstinte mit einer Streulicht-Viskositätsänderung von ≤ 55 %, vorzugsweise ≤ 50 %, bevorzugter ≤ 45 %;
(c) eine gelbe Prozesstinte mit einer Streulicht-Viskositätsänderung von ≤ 23 %, vorzugsweise ≤ 18 %, bevorzugter ≤ 13 %;
(d) eine schwarze Prozesstinte mit einer Streulicht-Viskositätsänderung von ≤ 20 %, vorzugsweise ≤ 15 %, bevorzugter ≤ 12 %.

10. Zusammensetzung nach einem der vorhergehenden Ansprüche, wobei die Zusammensetzung durch Belichtung mit zwei oder mehr separaten UV-Bestrahlungen gehärtet werden kann, wobei die Gesamtsumme aller separaten UV-Belichtungen ≥ 100 mJ/cm². ist, und/oder wobei die Zusammensetzung zur Aufbringung durch UV-härtbaren Tintenstrahldruck geeignet ist.

11. Prozess zum Drucken und Härten einer Tintenzusammensetzung, umfassend Aufbringen der Zusammensetzung nach einem der vorhergehenden Ansprüche auf ein Substrat und Härten, wobei vorzugsweise das Aufbringungsverfahren Tintenstrahldruck ist.

12. Prozess nach Anspruch 11, wobei Härten durch Belichtung mit zwei oder mehr separaten UV-Bestrahlungen durchgeführt wird, und/oder wobei die Gesamtsumme aller separaten UV-Belichtungen ≥ 100 mJ/cm². beträgt.

13. Verfahren zum Bereitstellen eines bedruckten Artikels, umfassend Tintenstrahldrucken einer Tintenstrahlzusammensetzung nach einem der Ansprüche 1 bis 10 auf ein Substrat und Härten der Zusammensetzung durch Belichten mit zwei oder mehr separaten UV-Bestrahlungen, wobei die Gesamtsumme von allen der separaten UV-Belichtungen ≥ 100 mJ/cm². beträgt.

14. Prozess nach Anspruch 11 oder 12, oder Verfahren nach Anspruch 13, wobei die Gesamtdosis von allen der UV-Belichtungen ≤ 1000 mJ/cm² beträgt, wobei vorzugsweise die Gesamtdosis von allen der UV-Belichtungen ≤ 750 mJ/cm², vorzugsweise ≤ 500 mJ/cm², bevorzugter ≤300 mJ/cm², noch bevorzugter ≤ 200 mJ/cm² beträgt.

15. Prozess nach einem der Ansprüche 12 oder 14, oder Verfahren nach einem der Ansprüche 13 oder 14, wobei:
(a) die Tinte durch vier oder mehr separate UV-Belichtungen gehärtet wird;
(b) die Zeit zwischen mindestens zwei aufeinander folgenden Belichtungen mindestens 0,1 Sekunden beträgt;
(c) mindestens eine der separaten UV-Bestrahlungen durch eine UV-LED-Lichtquelle bereitgestellt wird; und/oder
(d) Härten lediglich unter Einwirkung der Emissionen von UV-LED-Lichtquellen erfolgt.

16. Prozess nach einem der Ansprüche 11, 12, 14 oder 15, oder Verfahren nach einem der Ansprüche 13 bis 15, bei dem Härten über einen Multipass-Tintenstrahldruckprozess erfolgt oder bei dem Härten über einen Single-Pass-Tintenstrahldruckprozess erfolgt.

17. Bedruckter Artikel, hergestellt nach dem Prozess gemäß einem der Ansprüche 11, 12 oder 14 bis 16, oder dem Verfahren gemäß einem der Ansprüche 13 bis 16.

## Revendications

1. Composition pour jet d'encre durcissable par des UV comprenant :
≥ 20 % (p/p) de tout mélange de monomères d'acrylate monofonctionnel ;
≤ 6,0 % (p/p) de tout mélange de photoinitiateurs ; et
une ou plusieurs amines acrylées ; l'amine ou les amines acrylées étant issues de la réaction de Michael d'un ou plusieurs monomères ou oligomères d'acrylate polyfonctionnel avec une ou plusieurs alcanolamines.

2. Composition selon la revendication 1,
(a) la composition comprenant ≤ 5,0 % (p/p) de tout mélange de photoinitiateurs, plus préférablement comprenant ≤ 4,0 % (p/p) de tout mélange de photoinitiateurs ;
(b) la composition comprenant 2,5 à 6,0 % (p/p) de tout mélange de photoinitiateurs
(c) le mélange de photoinitiateurs comprenant un photoinitiateur de type oxyde d'acylphosphine, un photoinitiateur de type thioxanthone ou une combinaison correspondante ;
(d) le mélange de photoinitiateurs comprenant un photoinitiateur de type oxyde d'acylphosphine ; et/ou
(e) le mélange de photoinitiateurs comprenant un photoinitiateur de type thioxanthone.

3. Composition selon la revendication 2,
(a) le photoinitiateur de type oxyde d'acylphosphine étant choisi dans le groupe constitué par l'oxyde de diphényl(2,4,6-triméthylbenzoyl)phosphine, l'oxyde de phénylbis(2,4,6-triméthylbenzoyl)phosphine, le (2,4,6-triméthylbenzoyl)phénylphosphinate d'éthyle, l'oxyde de bis(2,6-diméthoxybenzoyl)-2,4,4-triméthylpentylphosphine, tout oxyde d'acylphosphine, oxyde d'acylphosphine polymérisable ou oxyde d'acylphosphine polymérique polyfonctionnel, et des combinaisons correspondantes ; et/ou
(b) le photoinitiateur de type oxyde d'acylphosphine étant présent en une quantité ≤ 5,0 % (p/p), préférablement ≤ 4,0 % (p/p), plus préférablement ≤ 3,0 % (p/p) ; ou
(c) le photoinitiateur de type thioxanthone étant choisi dans le groupe constitué par l'isopropylthioxanthone, la diéthylthioxanthone (DETX), la chloropropylthioxanthone, la chlorothioxanthone, toute thioxanthone polyfonctionnelle, thioxanthone polymérisable ou thioxanthone polymérique, et des combinaisons correspondantes.

4. Composition selon une quelconque revendication précédente,
(a) le mélange de photoinitiateurs comprenant un ou plusieurs photoinitiateurs de type II, préférablement la diéthylthioxanthone (DETX) ;
(b) la composition comprenant ≥ 1 % (p/p), préférablement ≥ 2,0 % (p/p), plus préférablement ≥ 3 % (p/p) d'une ou plusieurs amines acrylées ;
(c) la composition comprenant ≥ 4,0 % (p/p) de tout mélange d'amines acrylées issues d'une alcanolamine ; et/ou
(d) l'amine ou les amines acrylées étant issues de la réaction de Michael d'éthanolamine avec tout mélange d'acrylate polyfonctionnel, préférablement tout mélange de monomères d'acrylate difonctionnel et trifonctionnel ; préférablement l'acrylate polyfonctionnel étant choisi dans le groupe constitué par le diacrylate d'hexanediol, le diacrylate de 3-méthylpentanediol, le triacrylate de triméthylolpropane éthoxylé, le triacrylate de propoxylate de glycérol, ou des combinaisons correspondantes.

5. Composition selon l'une quelconque des revendications 1 à 4, l'amine acrylée étant issue de la réaction de Michael de diéthanolamine avec tout mélange de monomères ou d'oligomères d'acrylate difonctionnel, trifonctionnel, tétrafonctionnel ou d'une fonctionnalité plus élevée ou l'amine acrylée étant issue de la réaction de Michael de tout mélange d'éthanolamine et de diéthanolamine avec le triacrylate de triméthylolpropane éthoxylé.

6. Composition selon l'une quelconque des revendications 1 à 4, l'amine acrylée étant issue de la réaction d'éthanolamine avec tout mélange de diacrylate d'hexanediol et de diacrylate de 3-méthylpentanediol ou l'amine acrylée étant issue de la réaction d'éthanolamine avec tout mélange de diacrylates de poly(éthylène glycol) et de diacrylates de poly(propylène glycol).

7. Composition selon une quelconque revendication précédente,
(a) la composition étant une composition d'encre pour jet d'encre ;
(b) la composition comprenant ≥ 30 % (p/p) de tout mélange de monomères monofonctionnels, préférablement ≥ 40 % (p/p) de tout mélange de monomères monofonctionnels ; et/ou
(c) la composition comprenant ≤ 40 % de tout mélange de monomères polyfonctionnels, préférablement ≤ 30 % de tout mélange de monomères polyfonctionnels, préférablement ≤ 20 % de tout mélange de monomères polyfonctionnels, plus préférablement ≤ 10 % de tout mélange de monomères polyfonctionnels préférablement, le monomère polyfonctionnel étant un produit de réaction d'éthers d'alcanedioldiglycidyle avec l'acide acrylique.

8. Composition selon une quelconque revendication précédente comprenant en outre :
(a) un époxy acrylate, préférablement l'époxy acrylate étant le produit de réaction d'un éther d'alcanedioldiglycidyle avec l'acide acrylique ;
(b) un acrylate de polyester, préférablement l'acrylate de polyester possédant une fonctionnalité acrylate de trois ou moins ;
(c) une résine acrylique inerte ; et/ou
(d) un ou plusieurs colorants.

9. Composition selon une quelconque revendication précédente, la composition étant :
(a) une encre cyan de processus possédant un changement de viscosité de lumière parasite de ≤ 20 %, préférablement ≤ 15 %, plus préférablement ≤ 10 % ;
(b) une encre magenta de processus possédant un changement de viscosité de lumière parasite de ≤ 55 %, préférablement ≤ 50 %, plus préférablement ≤ 45 % ;
(c) une encre jaune de processus possédant un changement de viscosité de lumière parasite de ≤ 23 %, préférablement ≤ 18 %, plus préférablement ≤ 13 % ; ou
(d) une encre noire de processus possédant un changement de viscosité de lumière parasite de ≤ 20 %, préférablement ≤ 15 %, plus préférablement ≤ 12 %.

10. Composition selon une quelconque revendication précédente, la composition pouvant être durcie par exposition à deux irradiations UV distinctes ou plus, où la somme totale de toutes les expositions aux UV distinctes est ≥ 100 mJ/cm² et/ou la composition étant appropriée pour une application par impression par jet d'encre durcissable par des UV.

11. Processus d'impression et de durcissement d'une composition d'encre, comprenant l'application de la composition selon une quelconque revendication précédente sur un substrat et le durcissement, préférablement le procédé d'application étant une impression par jet d'encre.

12. Processus selon la revendication 11, le durcissement étant réalisé par exposition à deux irradiations UV distinctes ou plus et/ou la somme totale de toutes les expositions aux UV distinctes étant ≥ 100 mJ/cm².

13. Procédé de fourniture d'un article imprimé, comprenant une impression par jet d'encre d'une composition pour jet d'encre selon l'une quelconque des revendications 1 à 10 sur un substrat et le durcissement de la composition par exposition à deux irradiations UV distinctes ou plus, la somme totale de toutes les expositions aux UV distinctes étant ≥ 100 mJ/cm².

14. Processus selon la revendication 11 ou 12 ou procédé selon la revendication 13, la dose totale de toutes les expositions aux UV étant ≤ 1 000 mJ/cm² préférablement, la dose totale de toutes les expositions aux UV étant ≤ 750 mJ/cm², préférablement ≤ 500 mJ/cm², plus préférablement ≤ 300 mJ/cm², encore plus préférablement ≤ 200 mJ/cm².

15. Processus selon l'une quelconque des revendications 12 ou 14, ou procédé selon l'une quelconque des revendications 13 ou 14,
(a) l'encre étant durcie par quatre expositions aux UV distinctes ou plus ;
(b) le temps entre au moins deux expositions successives étant d'au moins 0,1 seconde ;
(c) au moins l'une des irradiations UV distinctes étant fournie par une source de lumière UV-LED ; et/ou
(d) le durcissement étant uniquement sous l'action des émissions de sources de lumière UV-LED.

16. Processus selon l'une quelconque des revendications 11, 12, 14 ou 15, ou procédé selon l'une quelconque des revendications 13 à 15, qui est durci via un processus d'impression par jet d'encre à plusieurs passages ou qui est durci via un processus d'impression par jet d'encre à passage unique.

17. Article imprimé préparé par le processus selon l'une quelconque des revendications 11, 12 ou 14 à 16, ou le procédé selon l'une quelconque des revendications 13 à 16.
